# EUROPEAN PATENT APPLICATION

(11) **EP 3 267 667 A2**
(43) Date of publication of application: **10.01.2018**
(21) Application number: 16002269.5
(22) Date of filing: 24.10.2016
(51) Int. Cl.: H04M 1/725

(54) **MOBILE TERMINAL AND METHOD FOR CONTROLLING THE SAME, DISPLAY DEVICE AND METHOD FOR CONTROLLING THE SAME**

(30) Priority: 06.07.2016 KR 20160085356
(71) Applicant: LG Electronics Inc., Seoul 07336 (KR)
(72) Inventor: KIM, Namki, 06772 Seoul (KR); KIM, Insuk, 06772 Seoul (KR); OH, Sesook, 06772 Seoul (KR); SEO, Kyunghye, 06772 Seoul (KR); Choi, Jian, 06772 Seoul (KR); Kang, Shinnyue, 06772 Seoul (KR); Jeon, Bongjeong, 06772 Seoul (KR); Yang, Yoonseok, 06772 Seoul (KR)
(74) Representative: Beyer, Andreas

(57) **Abstract**

A mobile terminal (400) and method for controlling the same, and a display device (401) and method for controlling the same are disclosed. The present invention provides a mobile terminal (400) including a sensing unit (410), a wireless communication unit (420) for communicating with a display device (401), a display unit (430), and a control unit (460), wherein when detecting that the mobile terminal (400) satisfies a first location condition of a display unit (431) of the display device (401), the control unit (460) receives, from the display device (401), a signal corresponding to a first content executed in the display device (401). Moreover, the invention provides a display device (401) including a sensing unit (411), a wireless communication unit (421) for communicating with a mobile terminal (400), a display unit (431), and a control unit (461), wherein when the control unit (461) detects that the mobile terminal (400) satisfies a first location condition while running a first content, the control unit (461) transmits information corresponding to the running first content to the mobile terminal (400).

## Description

### BACKGROUND OF THE INVENTION

### Field of the Invention

The present invention relates to a mobile terminal and method for controlling the same, and a display device and method for controlling the same. More particularly, the present invention relates to a mobile terminal for receiving a signal from a display device when detecting that the mobile terminal satisfies a predetermined location condition of a display unit of the display device and method for controlling the same. In addition, the present invention relates to a display device for transmitting information corresponding to a running content to a mobile terminal when the display device detects that the mobile terminal satisfies a predetermined location condition while running the content and method for controlling the same.

### Discussion of the Related Art

Terminals may be generally classified as mobile/portable terminals or stationary terminals according to their mobility. Mobile terminals may also be classified as handheld terminals or vehicle mounted terminals according to whether or not a user can directly carry the terminal.

Mobile terminals have become increasingly more functional. Examples of such functions include data and voice communications, capturing images and video via a camera, recording audio, playing music files via a speaker system, and displaying images and video on a display. Some mobile terminals include additional functionality which supports game playing, while other terminals are configured as multimedia players. More recently, mobile terminals have been configured to receive broadcast and multicast signals which permit viewing of content such as videos and television programs.

Efforts are ongoing to support and increase the functionality of mobile terminals. Such efforts include software and hardware improvements, as well as changes and improvements in the structural components.

Recently, the number of users carrying both a portable smart phone and a tablet for playing back contents such as a video file and the like has increased.

Therefore, an interface capable of allowing a smart phone and a tablet, which are used by a single user or multiple users, to share contents currently executed in the respective devices is required.

### SUMMARY OF THE INVENTION

Accordingly, an object of the present invention is to address the above-noted and other problems.

Accordingly, embodiments of the present invention are directed to a mobile terminal and controlling method thereof that substantially obviate one or more problems due to limitations and disadvantages of the related art.

An object of the present invention is to provide a display device for transmitting information corresponding to a running content to a mobile terminal when the display device detects that the mobile terminal satisfies a predetermined location condition while running the content and method for controlling the same.

Technical tasks obtainable from the present invention are non-limited by the above-mentioned technical tasks. And, other unmentioned technical tasks can be clearly understood from the following description by those having ordinary skill in the technical field to which the present invention pertains.

Additional advantages, objects, and features of the invention will be set forth in the disclosure herein as well as the accompanying drawings. Such aspects may also be appreciated by those skilled in the art based on the disclosure herein.

To achieve these objects and other advantages and in accordance with the purpose of the invention, as embodied and broadly described herein, a mobile terminal according to the present invention may include a sensing unit, a wireless communication unit configured to perform communication with a display device, a display unit, and a control unit. In addition, when detecting that the mobile terminal satisfies a first location condition of a display unit of the display device, the control unit may receive, from the display device, a signal corresponding to a first content currently executed in the display device.

According to one aspect of the present invention, when sensing a first input signal, the control unit may display a list of contents linkable to the first content on the display unit. When sensing a second input signal for selecting a second content contained in the content list, the control unit may execute the second content. In this case, the second content may be an application related to the first content.

According to one aspect of the present invention, the mobile terminal may further include a camera. If the second content is a camera application, the control unit may capture one or more images through the camera and then transmit, to the display device, a control signal for controlling the display device to display the captured one or more images on the first content.

According to one aspect of the present invention, when sensing a third input signal in a state in which the mobile terminal is located in a first predetermined area of the display unit of the display device, the control unit may terminate the execution of the second content. In this case, the third input signal may be identical to the first signal.

According to one aspect of the present invention, the mobile terminal may include a memory. The control unit may execute a content identical to the first content currently executed in the display device. In addition, the control unit may sense a fourth input signal in a state in which the mobile terminal satisfies a second location condition of the display unit of the display device. Moreover, the control unit may display a first sub-list of the first content, which is contained in the memory, on the display unit according to the fourth input signal. Furthermore, the control unit may transmit, to the display device, a control signal for controlling the display device to display a second sub-list of the first content, which is contained in a memory of the display device, on the display unit of the display device.

According to one aspect of the present invention, the mobile terminal may include an audio output unit. If the first content is a music playback application, the control unit may display a third sub-list including both entries contained in the first sub-list and entries contained in the second sub-list according to a fifth input signal of selecting the first sub-list.

According to one aspect of the present invention, the control unit may execute a third content according to a sixth input signal. In this case, the third content may include a web browser application for retrieving an item contained in the first content.

According to one aspect of the present invention, when the control unit senses a seventh input signal while running the third content, the control unit may automatically retrieve the item contained in the first content and then output a retrieved result through the web browser application.

According to one aspect of the present invention, when the control unit detects that the mobile terminal satisfies a third location condition of the display unit of the display device while running a fourth content on the display unit, the control unit may transmit, to the display device, a control signal for controlling the display device to execute the fourth content in a predetermined partial area of the display unit of the display device.

According to one aspect of the present invention, when detecting that the mobile terminal satisfies a fourth location condition of the display unit of the display device, the control unit may recognize the first content currently executed in the display device. In this case, the first content may include an application with a controller area and the fourth location condition may be a condition in which the mobile terminal is overlaid with at least a part of the controller area of the first content displayed on the display unit of the display device. In addition, when sensing an eighth input signal, the control unit may display a controller of the first content on the display unit.

According to one aspect of the present invention, when sensing a ninth input signal for controlling the controller, the control unit may transmit a control signal for controlling the first content to the display device based on the ninth input signal.

According to one aspect of the present invention, when detecting that the mobile terminal satisfies a fifth location condition of the display unit of the display device, the control unit may recognize the first content currently executed in the display device. In this case, the first content may include an application with a downloading area for downloading data and the fifth location condition may be a condition in which the mobile terminal is overlaid with at least a part of the downloading area of the first content displayed on the display unit of the display device. In addition, when sensing an tenth input signal, the control unit may download data that is to be downloaded by the first content currently executed in the display device.

In another aspect of the present invention, a display device according to the present invention may include a sensing unit, a wireless communication unit configured to perform communication with a mobile terminal, a display unit, and a control unit. In addition, when the control unit detects that the mobile terminal satisfies a first location condition while running a first content, the control unit may transmit information corresponding to the currently running first content to the mobile terminal.

According to one aspect of the present invention, when receiving a control signal for requesting to execute a second content from the mobile terminal, the control unit may execute the second content in interaction with the first content.

According to one aspect of the present invention, the display device may include a memory and an audio output unit. In addition, the control unit may detect that the mobile terminal executes the first content in a state in which the mobile terminal satisfies a second location condition of the display unit. Moreover, when receiving a control signal for requesting to display a first sub-list of the first content from the mobile terminal, the control unit may display the first sub-list contained in the memory on the display unit. Furthermore, if the first content is a music playback application, the control unit may display a third sub-list including both entries contained in the first sub-list and entries contained in a second sub-list according to a first input signal of selecting the first sub-list. In this case, the second sub-list may be a sub-list of the first content received from the mobile terminal.

According to one aspect of the present invention, when the control unit detects that the mobile terminal satisfies a third location condition of the display unit while running the first content, the control unit may output a third content currently executed in the mobile terminal through a predetermined partial area of the display unit.

According to one aspect of the present invention, the first content may include an application with a controller area. In addition, when detecting that the mobile terminal satisfies a fourth location condition of the display unit, the control unit may transmit, to the mobile terminal, a control signal for controlling the mobile terminal to display a controller of the first content. In this case, the fourth location condition may be a condition in which the mobile terminal is overlaid with at least a part of the controller area of the first content displayed on the display unit. Moreover, the control unit may terminate the display of the controller area on the display unit.

According to one aspect of the present invention, the control unit may receive, from the mobile terminal, a control signal for controlling the first content through the controller. In addition, the control unit may control the first content according to the control signal.

In another aspect of the present invention, a method of controlling a mobile terminal according to the present invention may include the steps of receiving, from a display device, a signal corresponding to a first content currently executed in the display device when detecting that the mobile terminal satisfies a first location condition of a display unit of the display device and displaying a second content on a display unit when sensing an input signal.

In a further aspect of the present invention, a method of controlling a display device according to the present invention may include the steps of executing a first content and transmitting, to a mobile terminal, information corresponding to the currently running first content when the display device detects that the mobile terminal satisfies a first location condition of a display unit of the display device while running the first content.

Accordingly, the present invention provides the following effects and/or advantages.

According to at least one of the embodiments of the present invention, in case that a mobile terminal detects that the mobile terminal satisfies a predetermined location condition of a display unit of a display device, the mobile terminal receives a signal from the display device, whereby the mobile terminal can output a content related to a content currently executed in the display device.

According to at least one of the embodiments of the present invention, in case that while running a content, a display device detects that a mobile terminal satisfies a predetermined location condition, the display device transmits information corresponding to the currently running content to the mobile terminal, whereby the display device can display a content controlled by the connected mobile terminal together with the currently running content.

An additional scope of applicability of the present invention shall become obvious from the detailed description in the following. It is to be understood that both the foregoing general description and the following detailed description of the preferred embodiments of the present invention are exemplary and explanatory and are intended to provide further explanation of the invention as claimed.

### BRIEF DESCRIPTION OF THE DRAWINGS

The present invention will become more fully understood from the detailed description given herein below and the accompanying drawings, which are given by illustration only, and thus are not limitative of the present invention, and wherein:
FIG. 1A is a block diagram of a mobile terminal in accordance with the present disclosure;
FIGS. 1B and 1C are conceptual views of one example of the mobile terminal, viewed from different directions;
FIG. 2 is a conceptual view of a deformable mobile terminal according to an alternative embodiment of the present disclosure;
FIG. 3 is a conceptual view of a wearable mobile terminal according to another alternative embodiment of the present disclosure;
FIG. 4 is a block diagram for explaining configuration modules of a mobile terminal and a display device according to an embodiment of the present invention;
FIG. 5 is a diagram for explaining an example of generating a content link between a mobile terminal and a display device according to an embodiment of the present invention;
FIG. 6 is a diagram for explaining an example of transceiving pictures between a mobile terminal and a display device according to an embodiment of the present invention;
FIG. 7 is a diagram for explaining an example of terminating a content link between a mobile terminal and a display device according to an embodiment of the present invention;
FIG. 8 is a diagram for explaining an example of displaying sub-lists of contents included in a mobile terminal and a display device according to an embodiment of the present invention;
FIG. 9 is a diagram for explaining an example of searching for an item included in a content currently executed in a display device using a mobile terminal according to an embodiment of the present invention;
FIG. 10 is a diagram for explaining an example of running a content currently executed in a mobile terminal on a display device according to an embodiment of the present invention;
FIG. 11 is a diagram for explaining an example of controlling a content currently executed in a display device through a mobile terminal according to an embodiment of the present invention;
FIG. 12 is a diagram for explaining another example of controlling a content currently executed in a display device through a mobile terminal according to an embodiment of the present invention;
FIG. 13 is a diagram for explaining an example of running a content currently executed in a display device through a mobile terminal according to an embodiment of the present invention;
FIG. 14 is a diagram for explaining an example of outputting a content displayed on a display device through a mobile terminal according to an embodiment of the present invention;
FIG. 15 is a diagram for explaining an example of performing authentication of a display device using a fingerprint recognition sensor of a mobile terminal according to an embodiment of the present invention;
FIG. 16 is a flowchart for explaining an example of outputting a content related to a content currently executed in a display device to a mobile terminal according to an embodiment of the present invention; and
FIG. 17 is a flowchart for explaining an example of transmitting information corresponding to a content from a display device to a mobile terminal according to an embodiment of the present invention.

### DETAILED DESCRIPTION OF THE INVENTION

Description will now be given in detail according to exemplary embodiments disclosed herein, with reference to the accompanying drawings. For the sake of brief description with reference to the drawings, the same or equivalent components may be provided with the same reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function. In the present disclosure, that which is well-known to one of ordinary skill in the relevant art has generally been omitted for the sake of brevity. The accompanying drawings are used to help easily understand various technical features and it should be understood that the embodiments presented herein are not limited by the accompanying drawings. As such, the present disclosure should be construed to extend to any alterations, equivalents and substitutes in addition to those which are particularly set out in the accompanying drawings.

It will be understood that although the terms first, second, etc. may be used herein to describe various elements, these elements should not be limited by these terms. These terms are generally only used to distinguish one element from another.

It will be understood that when an element is referred to as being "connected with" another element, the element can be connected with the other element or intervening elements may also be present. In contrast, when an element is referred to as being "directly connected with" another element, there are no intervening elements present.

A singular representation may include a plural representation unless it represents a definitely different meaning from the context. Terms such as "include" or "has" are used herein and should be understood that they are intended to indicate an existence of several components, functions or steps, disclosed in the specification, and it is also understood that greater or fewer components, functions, or steps may likewise be utilized.

Mobile terminals presented herein may be implemented using a variety of different types of terminals. Examples of such terminals include cellular phones, smart phones, user equipment, laptop computers, digital broadcast terminals, personal digital assistants (PDAs), portable multimedia players (PMPs), navigators, portable computers (PCs), slate PCs, tablet PCs, ultra books, wearable devices (for example, smart watches, smart glasses, head mounted displays (HMDs)), and the like.

By way of non-limiting example only, further description will be made with reference to particular types of mobile terminals. However, such teachings apply equally to other types of terminals, such as those types noted above. In addition, these teachings may also be applied to stationary terminals such as digital TV, desktop computers, and the like.

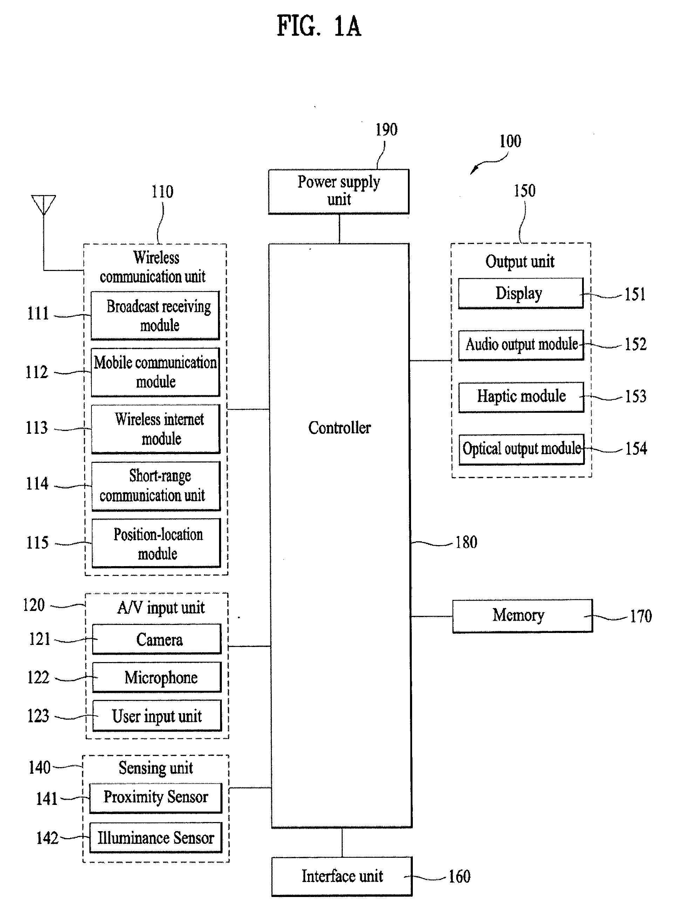

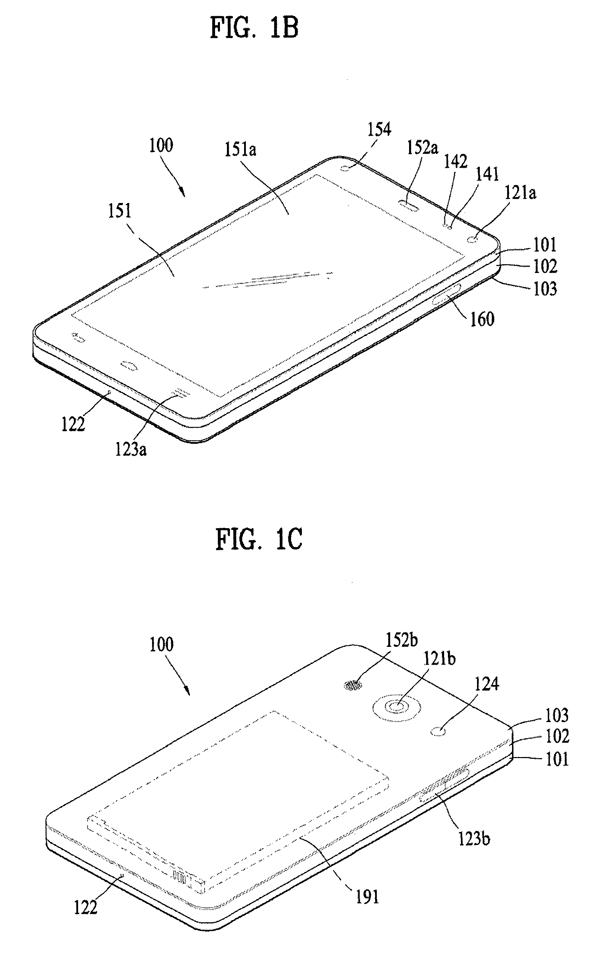

Reference is now made to FIGS. 1A-1C, where FIG. 1A is a block diagram of a mobile terminal in accordance with the present disclosure, and FIGS. 1B and 1C are conceptual views of one example of the mobile terminal, viewed from different directions.

The mobile terminal 100 is shown having components such as a wireless communication unit 110, an input unit 120, a sensing unit 140, an output unit 150, an interface unit 160, a memory 170, a controller 180, and a power supply unit 190. It is understood that implementing all of the illustrated components is not a requirement, and that greater or fewer components may alternatively be implemented.

Referring now to FIG. 1A, the mobile terminal 100 is shown having wireless communication unit 110 configured with several commonly implemented components. For instance, the wireless communication unit 110 typically includes one or more components which permit wireless communication between the mobile terminal 100 and a wireless communication system or network within which the mobile terminal is located.

The wireless communication unit 110 typically includes one or more modules which permit communications such as wireless communications between the mobile terminal 100 and a wireless communication system, communications between the mobile terminal 100 and another mobile terminal, communications between the mobile terminal 100 and an external server. Further, the wireless communication unit 110 typically includes one or more modules which connect the mobile terminal 100 to one or more networks. To facilitate such communications, the wireless communication unit 110 includes one or more of a broadcast receiving module 111, a mobile communication module 112, a wireless Internet module 113, a short-range communication module 114, and a location information module 115.

The input unit 120 includes a camera 121 for obtaining images or video, a microphone 122, which is one type of audio input device for inputting an audio signal, and a user input unit 123 (for example, a touch key, a push key, a mechanical key, a soft key, and the like) for allowing a user to input information. Data (for example, audio, video, image, and the like) is obtained by the input unit 120 and may be analyzed and processed by controller 180 according to device parameters, user commands, and combinations thereof.

The sensing unit 140 is typically implemented using one or more sensors configured to sense internal information of the mobile terminal, the surrounding environment of the mobile terminal, user information, and the like. For example, in FIG. 1A, the sensing unit 140 is shown having a proximity sensor 141 and an illumination sensor 142.

If desired, the sensing unit 140 may alternatively or additionally include other types of sensors or devices, such as a touch sensor, an acceleration sensor, a magnetic sensor, a G-sensor, a gyroscope sensor, a motion sensor, an RGB sensor, an infrared (IR) sensor, a finger scan sensor, a ultrasonic sensor, an optical sensor (for example, camera 121), a microphone 122, a battery gauge, an environment sensor (for example, a barometer, a hygrometer, a thermometer, a radiation detection sensor, a thermal sensor, and a gas sensor, among others), and a chemical sensor (for example, an electronic nose, a health care sensor, a biometric sensor, and the like), to name a few. The mobile terminal 100 may be configured to utilize information obtained from sensing unit 140, and in particular, information obtained from one or more sensors of the sensing unit 140, and combinations thereof.

The output unit 150 is typically configured to output various types of information, such as audio, video, tactile output, and the like. The output unit 150 is shown having a display unit 151, an audio output module 152, a haptic module 153, and an optical output module 154.

The display unit 151 may have an inter-layered structure or an integrated structure with a touch sensor in order to facilitate a touch screen. The touch screen may provide an output interface between the mobile terminal 100 and a user, as well as function as the user input unit 123 which provides an input interface between the mobile terminal 100 and the user.

The interface unit 160 serves as an interface with various types of external devices that can be coupled to the mobile terminal 100. The interface unit 160, for example, may include any of wired or wireless ports, external power supply ports, wired or wireless data ports, memory card ports, ports for connecting a device having an identification module, audio input/output (I/O) ports, video I/O ports, earphone ports, and the like. In some cases, the mobile terminal 100 may perform assorted control functions associated with a connected external device, in response to the external device being connected to the interface unit 160.

The memory 170 is typically implemented to store data to support various functions or features of the mobile terminal 100. For instance, the memory 170 may be configured to store application programs executed in the mobile terminal 100, data or instructions for operations of the mobile terminal 100, and the like. Some of these application programs may be downloaded from an external server via wireless communication. Other application programs may be installed within the mobile terminal 100 at time of manufacturing or shipping, which is typically the case for basic functions of the mobile terminal 100 (for example, receiving a call, placing a call, receiving a message, sending a message, and the like). It is common for application programs to be stored in the memory 170, installed in the mobile terminal 100, and executed by the controller 180 to perform an operation (or function) for the mobile terminal 100.

The controller 180 typically functions to control overall operation of the mobile terminal 100, in addition to the operations associated with the application programs. The controller 180 may provide or process information or functions appropriate for a user by processing signals, data, information and the like, which are input or output by the various components depicted in Fig. 1A, or activating application programs stored in the memory 170. As one example, the controller 180 controls some or all of the components illustrated in FIGS. 1A-1C according to the execution of an application program that have been stored in the memory 170.

The power supply unit 190 can be configured to receive external power or provide internal power in order to supply appropriate power required for operating elements and components included in the mobile terminal 100. The power supply unit 190 may include a battery, and the battery may be configured to be embedded in the terminal body, or configured to be detachable from the terminal body.

Referring still to FIG. 1A, various components depicted in this figure will now be described in more detail. Regarding the wireless communication unit 110, the broadcast receiving module 111 is typically configured to receive a broadcast signal and/or broadcast associated information from an external broadcast managing entity via a broadcast channel. The broadcast channel may include a satellite channel, a terrestrial channel, or both. In some embodiments, two or more broadcast receiving modules 111 may be utilized to facilitate simultaneously receiving of two or more broadcast channels, or to support switching among broadcast channels.

system which generates and transmits a broadcast signal and/or broadcast associated information, or a server which receives a pre-generated broadcast signal and/or broadcast associated information, and sends such items to the mobile terminal. The broadcast signal may be implemented using any of a TV broadcast signal, a radio broadcast signal, a data broadcast signal, and combinations thereof, among others. The broadcast signal in some cases may further include a data broadcast signal combined with a TV or radio broadcast signal.

The broadcast signal may be encoded according to any of a variety of technical standards or broadcasting methods (for example, International Organization for Standardization (ISO), International Electrotechnical Commission (IEC), Digital Video Broadcast (DVB), Advanced Television Systems Committee (ATSC), and the like) for transmission and reception of digital broadcast signals. The broadcast receiving module 111 can receive the digital broadcast signals using a method appropriate for the transmission method utilized.

Examples of broadcast associated information may include information associated with a broadcast channel, a broadcast program, a broadcast event, a broadcast service provider, or the like. The broadcast associated information may also be provided via a mobile communication network, and in this case, received by the mobile communication module 112.

The broadcast associated information may be implemented in various formats. For instance, broadcast associated information may include an Electronic Program Guide (EPG) of Digital Multimedia Broadcasting (DMB), an Electronic Service Guide (ESG) of Digital Video Broadcast-Handheld (DVB-H), and the like. Broadcast signals and/or broadcast associated information received via the broadcast receiving module 111 may be stored in a suitable device, such as a memory 170.

The mobile communication module 112 can transmit and/or receive wireless signals to and from one or more network entities. Typical examples of a network entity include a base station, an external mobile terminal, a server, and the like. Such network entities form part of a mobile communication network, which is constructed according to technical standards or communication methods for mobile communications (for example, Global System for Mobile Communication (GSM), Code Division Multi Access (CDMA), CDMA2000(Code Division Multi Access 2000), EV-DO(Enhanced Voice-Data Optimized or Enhanced Voice-Data Only), Wideband CDMA (WCDMA), High Speed Downlink Packet access (HSDPA), HSUPA(High Speed Uplink Packet Access), Long Term Evolution (LTE), LTE-A(Long Term Evolution-Advanced), and the like). Examples of wireless signals transmitted and/or received via the mobile communication module 112 include audio call signals, video (telephony) call signals, or various formats of data to support communication of text and multimedia messages.

The wireless Internet module 113 is configured to facilitate wireless Internet access. This module may be internally or externally coupled to the mobile terminal 100. The wireless Internet module 113 may transmit and/or receive wireless signals via communication networks according to wireless Internet technologies.

Examples of such wireless Internet access include Wireless LAN (WLAN), Wireless Fidelity (Wi-Fi), Wi-Fi Direct, Digital Living Network Alliance (DLNA), Wireless Broadband (WiBro), Worldwide Interoperability for Microwave Access (WiMAX), High Speed Downlink Packet Access (HSDPA), HSUPA (High Speed Uplink Packet Access), Long Term Evolution (LTE), LTE-A (Long Term Evolution-Advanced), and the like. The wireless Internet module 113 may transmit/receive data according to one or more of such wireless Internet technologies, and other Internet technologies as well.

In some embodiments, when the wireless Internet access is implemented according to, for example, WiBro, HSDPA, HSUPA, GSM, CDMA, WCDMA, LTE, LTE-A and the like, as part of a mobile communication network, the wireless Internet module 113 performs such wireless Internet access. As such, the Internet module 113 may cooperate with, or function as, the mobile communication module 112.

The short-range communication module 114 is configured to facilitate short-range communications. Suitable technologies for implementing such short-range communications include BLUETOOTHTM, Radio Frequency IDentification (RFID), Infrared Data Association (IrDA), Ultra-WideBand (UWB), ZigBee, Near Field Communication (NFC), Wireless-Fidelity (Wi-Fi), Wi-Fi Direct, Wireless USB (Wireless Universal Serial Bus), and the like. The short-range communication module 114 in general supports wireless communications between the mobile terminal 100 and a wireless communication system, communications between the mobile terminal 100 and another mobile terminal 100, or communications between the mobile terminal and a network where another mobile terminal 100 (or an external server) is located, via wireless area networks. One example of the wireless area networks is a wireless personal area networks.

In some embodiments, another mobile terminal (which may be configured similarly to mobile terminal 100) may be a wearable device, for example, a smart watch, a smart glass or a head mounted display (HMD), which is able to exchange data with the mobile terminal 100 (or otherwise cooperate with the mobile terminal 100). The short-range communication module 114 may sense or recognize the wearable device, and permit communication between the wearable device and the mobile terminal 100. In addition, when the sensed wearable device is a device which is authenticated to communicate with the mobile terminal 100, the controller 180, for example, may cause transmission of data processed in the mobile terminal 100 to the wearable device via the short-range communication module 114. Hence, a user of the wearable device may use the data processed in the mobile terminal 100 on the wearable device. For example, when a call is received in the mobile terminal 100, the user may answer the call using the wearable device. Also, when a message is received in the mobile terminal 100, the user can check the received message using the wearable device.

The location information module 115 is generally configured to detect, calculate, derive or otherwise identify a position of the mobile terminal. As an example, the location information module 115 includes a Global Position System (GPS) module, a Wi-Fi module, or both. If desired, the location information module 115 may alternatively or additionally function with any of the other modules of the wireless communication unit 110 to obtain data related to the position of the mobile terminal.

As one example, when the mobile terminal uses a GPS module, a position of the mobile terminal may be acquired using a signal sent from a GPS satellite. As another example, when the mobile terminal uses the Wi-Fi module, a position of the mobile terminal can be acquired based on information related to a wireless access point (AP) which transmits or receives a wireless signal to or from the Wi-Fi module.

The input unit 120 may be configured to permit various types of input to the mobile terminal 120. Examples of such input include audio, image, video, data, and user input. Image and video input is often obtained using one or more cameras 121. Such cameras 121 may process image frames of still pictures or video obtained by image sensors in a video or image capture mode. The processed image frames can be displayed on the display unit 151 or stored in memory 170. In some cases, the cameras 121 may be arranged in a matrix configuration to permit a plurality of images having various angles or focal points to be input to the mobile terminal 100. As another example, the cameras 121 may be located in a stereoscopic arrangement to acquire left and right images for implementing a stereoscopic image.

The microphone 122 is generally implemented to permit audio input to the mobile terminal 100. The audio input can be processed in various manners according to a function being executed in the mobile terminal 100. If desired, the microphone 122 may include assorted noise removing algorithms to remove unwanted noise generated in the course of receiving the external audio.

The user input unit 123 is a component that permits input by a user. Such user input may enable the controller 180 to control operation of the mobile terminal 100. The user input unit 123 may include one or more of a mechanical input element (for example, a key, a button located on a front and/or rear surface or a side surface of the mobile terminal 100, a dome switch, a jog wheel, a jog switch, and the like), or a touch-sensitive input, among others. As one example, the touch-sensitive input may be a virtual key or a soft key, which is displayed on a touch screen through software processing, or a touch key which is located on the mobile terminal at a location that is other than the touch screen. On the other hand, the virtual key or the visual key may be displayed on the touch screen in various shapes, for example, graphic, text, icon, video, or a combination thereof.

The sensing unit 140 is generally configured to sense one or more of internal information of the mobile terminal, surrounding environment information of the mobile terminal, user information, or the like. The controller 180 generally cooperates with the sending unit 140 to control operation of the mobile terminal 100 or execute data processing, a function or an operation associated with an application program installed in the mobile terminal based on the sensing provided by the sensing unit 140. The sensing unit 140 may be implemented using any of a variety of sensors, some of which will now be described in more detail.

The proximity sensor 141 may include a sensor to sense presence or absence of an object approaching a surface, or an object located near a surface, by using an electromagnetic field, infrared rays, or the like without a mechanical contact. The proximity sensor 141 may be arranged at an inner region of the mobile terminal covered by the touch screen, or near the touch screen.

The proximity sensor 141, for example, may include any of a transmissive type photoelectric sensor, a direct reflective type photoelectric sensor, a mirror reflective type photoelectric sensor, a high-frequency oscillation proximity sensor, a capacitance type proximity sensor, a magnetic type proximity sensor, an infrared rays proximity sensor, and the like. When the touch screen is implemented as a capacitance type, the proximity sensor 141 can sense proximity of a pointer relative to the touch screen by changes of an electromagnetic field, which is responsive to an approach of an object with conductivity. In this case, the touch screen (touch sensor) may also be categorized as a proximity sensor.

The term "proximity touch" will often be referred to herein to denote the scenario in which a pointer is positioned to be proximate to the touch screen without contacting the touch screen. The term "contact touch" will often be referred to herein to denote the scenario in which a pointer makes physical contact with the touch screen. For the position corresponding to the proximity touch of the pointer relative to the touch screen, such position will correspond to a position where the pointer is perpendicular to the touch screen. The proximity sensor 141 may sense proximity touch, and proximity touch patterns (for example, distance, direction, speed, time, position, moving status, and the like).

In general, controller 180 processes data corresponding to proximity touches and proximity touch patterns sensed by the proximity sensor 141, and cause output of visual information on the touch screen. In addition, the controller 180 can control the mobile terminal 100 to execute different operations or process different data according to whether a touch with respect to a point on the touch screen is either a proximity touch or a contact touch.

A touch sensor can sense a touch applied to the touch screen, such as display unit 151, using any of a variety of touch methods. Examples of such touch methods include a resistive type, a capacitive type, an infrared type, and a magnetic field type, among others.

As one example, the touch sensor may be configured to convert changes of pressure applied to a specific part of the display unit 151, or convert capacitance occurring at a specific part of the display unit 151, into electric input signals. The touch sensor may also be configured to sense not only a touched position and a touched area, but also touch pressure and/or touch capacitance. A touch object is generally used to apply a touch input to the touch sensor. Examples of typical touch objects include a finger, a touch pen, a stylus pen, a pointer, or the like.

When a touch input is sensed by a touch sensor, corresponding signals may be transmitted to a touch controller. The touch controller may process the received signals, and then transmit corresponding data to the controller 180. Accordingly, the controller 180 may sense which region of the display unit 151 has been touched. Here, the touch controller may be a component separate from the controller 180, the controller 180, and combinations thereof.

In some embodiments, the controller 180 may execute the same or different controls according to a type of touch object that touches the touch screen or a touch key provided in addition to the touch screen. Whether to execute the same or different control according to the object which provides a touch input may be decided based on a current operating state of the mobile terminal 100 or a currently executed application program, for example.

The touch sensor and the proximity sensor may be implemented individually, or in combination, to sense various types of touches. Such touches includes a short (or tap) touch, a long touch, a multi-touch, a drag touch, a flick touch, a pinch-in touch, a pinch-out touch, a swipe touch, a hovering touch, and the like.

If desired, an ultrasonic sensor may be implemented to recognize position information relating to a touch object using ultrasonic waves. The controller 180, for example, may calculate a position of a wave generation source based on information sensed by an illumination sensor and a plurality of ultrasonic sensors. Since light is much faster than ultrasonic waves, the time for which the light reaches the optical sensor is much shorter than the time for which the ultrasonic wave reaches the ultrasonic sensor. The position of the wave generation source may be calculated using this fact. For instance, the position of the wave generation source may be calculated using the time difference from the time that the ultrasonic wave reaches the sensor based on the light as a reference signal.

The camera 121 typically includes at least one a camera sensor (CCD, CMOS etc.), a photo sensor (or image sensors), and a laser sensor.

Implementing the camera 121 with a laser sensor may allow detection of a touch of a physical object with respect to a 3D stereoscopic image. The photo sensor may be laminated on, or overlapped with, the display device. The photo sensor may be configured to scan movement of the physical object in proximity to the touch screen. In more detail, the photo sensor may include photo diodes and transistors at rows and columns to scan content received at the photo sensor using an electrical signal which changes according to the quantity of applied light. Namely, the photo sensor may calculate the coordinates of the physical object according to variation of light to thus obtain position information of the physical object.

The display unit 151 is generally configured to output information processed in the mobile terminal 100. For example, the display unit 151 may display execution screen information of an application program executing at the mobile terminal 100 or user interface (UI) and graphic user interface (GUI) information in response to the execution screen information.

In some embodiments, the display unit 151 may be implemented as a stereoscopic display unit for displaying stereoscopic images. A typical stereoscopic display unit may employ a stereoscopic display scheme such as a stereoscopic scheme (a glass scheme), an auto-stereoscopic scheme (glassless scheme), a projection scheme (holographic scheme), or the like.

In general, a 3D stereoscopic image may include a left image (e.g., a left eye image) and a right image (e.g., a right eye image). According to how left and right images are combined into a 3D stereoscopic image, a 3D stereoscopic imaging method can be divided into a top-down method in which left and right images are located up and down in a frame, an L-to-R (left-to-right or side by side) method in which left and right images are located left and right in a frame, a checker board method in which fragments of left and right images are located in a tile form, an interlaced method in which left and right images are alternately located by columns or rows, and a time sequential (or frame by frame) method in which left and right images are alternately displayed on a time basis.

Also, as for a 3D thumbnail image, a left image thumbnail and a right image thumbnail can be generated from a left image and a right image of an original image frame, respectively, and then combined to generate a single 3D thumbnail image. In general, the term "thumbnail" may be used to refer to a reduced image or a reduced still image. A generated left image thumbnail and right image thumbnail may be displayed with a horizontal distance difference there between by a depth corresponding to the disparity between the left image and the right image on the screen, thereby providing a stereoscopic space sense.

A left image and a right image required for implementing a 3D stereoscopic image may be displayed on the stereoscopic display unit using a stereoscopic processing unit. The stereoscopic processing unit can receive the 3D image and extract the left image and the right image, or can receive the 2D image and change it into a left image and a right image.

The audio output module 152 is generally configured to output audio data. Such audio data may be obtained from any of a number of different sources, such that the audio data may be received from the wireless communication unit 110 or may have been stored in the memory 170. The audio data may be output during modes such as a signal reception mode, a call mode, a record mode, a voice recognition mode, a broadcast reception mode, and the like. The audio output module 152 can provide audible output related to a particular function (e.g., a call signal reception sound, a message reception sound, etc.) performed by the mobile terminal 100. The audio output module 152 may also be implemented as a receiver, a speaker, a buzzer, or the like.

A haptic module 153 can be configured to generate various tactile effects that a user feels, perceive, or otherwise experience. A typical example of a tactile effect generated by the haptic module 153 is vibration. The strength, pattern and the like of the vibration generated by the haptic module 153 can be controlled by user selection or setting by the controller. For example, the haptic module 153 may output different vibrations in a combining manner or a sequential manner.

Besides vibration, the haptic module 153 can generate various other tactile effects, including an effect by stimulation such as a pin arrangement vertically moving to contact skin, a spray force or suction force of air through a jet orifice or a suction opening, a touch to the skin, a contact of an electrode, electrostatic force, an effect by reproducing the sense of cold and warmth using an element that can absorb or generate heat, and the like.

The haptic module 153 can also be implemented to allow the user to feel a tactile effect through a muscle sensation such as the user's fingers or arm, as well as transferring the tactile effect through direct contact. Two or more haptic modules 153 may be provided according to the particular configuration of the mobile terminal 100.

An optical output module 154 can output a signal for indicating an event generation using light of a light source. Examples of events generated in the mobile terminal 100 may include message reception, call signal reception, a missed call, an alarm, a schedule notice, an email reception, information reception through an application, and the like.

A signal output by the optical output module 154 may be implemented in such a manner that the mobile terminal emits monochromatic light or light with a plurality of colors. The signal output may be terminated as the mobile terminal senses that a user has checked the generated event, for example.

The interface unit 160 serves as an interface for external devices to be connected with the mobile terminal 100. For example, the interface unit 160 can receive data transmitted from an external device, receive power to transfer to elements and components within the mobile terminal 100, or transmit internal data of the mobile terminal 100 to such external device. The interface unit 160 may include wired or wireless headset ports, external power supply ports, wired or wireless data ports, memory card ports, ports for connecting a device having an identification module, audio input/output (I/O) ports, video I/O ports, earphone ports, or the like.

The identification module may be a chip that stores various information for authenticating authority of using the mobile terminal 100 and may include a user identity module (UIM), a subscriber identity module (SIM), a universal subscriber identity module (USIM), and the like. In addition, the device having the identification module (also referred to herein as an "identifying device") may take the form of a smart card. Accordingly, the identifying device can be connected with the terminal 100 via the interface unit 160.

When the mobile terminal 100 is connected with an external cradle, the interface unit 160 can serve as a passage to allow power from the cradle to be supplied to the mobile terminal 100 or may serve as a passage to allow various command signals input by the user from the cradle to be transferred to the mobile terminal there through. Various command signals or power input from the cradle may operate as signals for recognizing that the mobile terminal is properly mounted on the cradle.

The memory 170 can store programs to support operations of the controller 180 and store input/output data (for example, phonebook, messages, still images, videos, etc.). The memory 170 may store data related to various patterns of vibrations and audio which are output in response to touch inputs on the touch screen.

The memory 170 may include one or more types of storage mediums including a Flash memory, a hard disk, a solid state disk, a silicon disk, a multimedia card micro type, a card-type memory (e.g., SD or DX memory, etc), a Random Access Memory (RAM), a Static Random Access Memory (SRAM), a Read-Only Memory (ROM), an Electrically Erasable Programmable Read-Only Memory (EEPROM), a Programmable Read-Only memory (PROM), a magnetic memory, a magnetic disk, an optical disk, and the like. The mobile terminal 100 may also be operated in relation to a network storage device that performs the storage function of the memory 170 over a network, such as the Internet.

The controller 180 may typically control the general operations of the mobile terminal 100. For example, the controller 180 may set or release a lock state for restricting a user from inputting a control command with respect to applications when a status of the mobile terminal meets a preset condition.

The controller 180 can also perform the controlling and processing associated with voice calls, data communications, video calls, and the like, or perform pattern recognition processing to recognize a handwriting input or a picture drawing input performed on the touch screen as characters or images, respectively. In addition, the controller 180 can control one or a combination of those components in order to implement various exemplary embodiments disclosed herein.

The power supply unit 190 receives external power or provide internal power and supply the appropriate power required for operating respective elements and components included in the mobile terminal 100. The power supply unit 190 may include a battery, which is typically rechargeable or be detachably coupled to the terminal body for charging.

The power supply unit 190 may include a connection port. The connection port may be configured as one example of the interface unit 160 to which an external charger for supplying power to recharge the battery is electrically connected.

As another example, the power supply unit 190 may be configured to recharge the battery in a wireless manner without use of the connection port. In this example, the power supply unit 190 can receive power, transferred from an external wireless power transmitter, using at least one of an inductive coupling method which is based on magnetic induction or a magnetic resonance coupling method which is based on electromagnetic resonance.

Various embodiments described herein may be implemented in a computer-readable medium, a machine-readable medium, or similar medium using, for example, software, hardware, or any combination thereof.

Referring now to FIGS. 1B and 1C, the mobile terminal 100 is described with reference to a bar-type terminal body. However, the mobile terminal 100 may alternatively be implemented in any of a variety of different configurations. Examples of such configurations include watch-type, clip-type, glasses-type, or as a folder-type, flip-type, slide-type, swing-type, and swivel-type in which two and more bodies are combined with each other in a relatively movable manner, and combinations thereof. Discussion herein will often relate to a particular type of mobile terminal (for example, bar-type, watch-type, glasses-type, and the like). However, such teachings with regard to a particular type of mobile terminal will generally apply to other types of mobile terminals as well.

The mobile terminal 100 will generally include a case (for example, frame, housing, cover, and the like) forming the appearance of the terminal. In this embodiment, the case is formed using a front case 101 and a rear case 102. Various electronic components are incorporated into a space formed between the front case 101 and the rear case 102. At least one middle case may be additionally positioned between the front case 101 and the rear case 102.

The display unit 151 is shown located on the front side of the terminal body to output information. As illustrated, a window 151a of the display unit 151 may be mounted to the front case 101 to form the front surface of the terminal body together with the front case 101.

In some embodiments, electronic components may also be mounted to the rear case 102. Examples of such electronic components include a detachable battery 191, an identification module, a memory card, and the like. Rear cover 103 is shown covering the electronic components, and this cover may be detachably coupled to the rear case 102. Therefore, when the rear cover 103 is detached from the rear case 102, the electronic components mounted to the rear case 102 are externally exposed.

As illustrated, when the rear cover 103 is coupled to the rear case 102, a side surface of the rear case 102 is partially exposed. In some cases, upon the coupling, the rear case 102 may also be completely shielded by the rear cover 103. In some embodiments, the rear cover 103 may include an opening for externally exposing a camera 121b or an audio output module 152b.

The cases 101, 102, 103 may be formed by injection-molding synthetic resin or may be formed of a metal, for example, stainless steel (STS), aluminum (Al), titanium (Ti), or the like.

As an alternative to the example in which the plurality of cases form an inner space for accommodating components, the mobile terminal 100 may be configured such that one case forms the inner space. In this example, a mobile terminal 100 having a uni-body is formed in such a manner that synthetic resin or metal extends from a side surface to a rear surface.

If desired, the mobile terminal 100 may include a waterproofing unit (not shown) for preventing introduction of water into the terminal body. For example, the waterproofing unit may include a waterproofing member which is located between the window 151a and the front case 101, between the front case 101 and the rear case 102, or between the rear case 102 and the rear cover 103, to hermetically seal an inner space when those cases are coupled.

FIGS. 1B and 1C depict certain components as arranged on the mobile terminal. However, it is to be understood that alternative arrangements are possible and within the teachings of the instant disclosure. Some components may be omitted or rearranged. For example, the first manipulation unit 123a may be located on another surface of the terminal body, and the second audio output module 152b may be located on the side surface of the terminal body.

The display unit 151 outputs information processed in the mobile terminal 100. The display unit 151 may be implemented using one or more suitable display devices. Examples of such suitable display devices include a liquid crystal display (LCD), a thin film transistor-liquid crystal display (TFT-LCD), an organic light emitting diode (OLED), a flexible display, a 3-dimensional (3D) display, an e-ink display, and combinations thereof.

The display unit 151 may be implemented using two display devices, which can implement the same or different display technology. For instance, a plurality of the display units 151 may be arranged on one side, either spaced apart from each other, or these devices may be integrated, or these devices may be arranged on different surfaces.

The display unit 151 may also include a touch sensor which senses a touch input received at the display unit. When a touch is input to the display unit 151, the touch sensor may be configured to sense this touch and the controller 180, for example, may generate a control command or other signal corresponding to the touch. The content which is input in the touching manner may be a text or numerical value, or a menu item which can be indicated or designated in various modes.

The touch sensor may be configured in a form of a film having a touch pattern, disposed between the window 151a and a display on a rear surface of the window 151a, or a metal wire which is patterned directly on the rear surface of the window 151a. Alternatively, the touch sensor may be integrally formed with the display. For example, the touch sensor may be disposed on a substrate of the display or within the display.

The display unit 151 may also form a touch screen together with the touch sensor. Here, the touch screen may serve as the user input unit 123 (see FIG. 1A). Therefore, the touch screen may replace at least some of the functions of the first manipulation unit 123a.

The first audio output module 152a may be implemented in the form of a speaker to output voice audio, alarm sounds, multimedia audio reproduction, and the like.

The window 151a of the display unit 151 will typically include an aperture to permit audio generated by the first audio output module 152a to pass. One alternative is to allow audio to be released along an assembly gap between the structural bodies (for example, a gap between the window 151a and the front case 101). In this case, a hole independently formed to output audio sounds may not be seen or is otherwise hidden in terms of appearance, thereby further simplifying the appearance and manufacturing of the mobile terminal 100.

The optical output module 154 can be configured to output light for indicating an event generation. Examples of such events include a message reception, a call signal reception, a missed call, an alarm, a schedule notice, an email reception, information reception through an application, and the like. When a user has checked a generated event, the controller can control the optical output unit 154 to stop the light output.

The first camera 121a can process image frames such as still or moving images obtained by the image sensor in a capture mode or a video call mode. The processed image frames can then be displayed on the display unit 151 or stored in the memory 170.

The first and second manipulation units 123a and 123b are examples of the user input unit 123, which may be manipulated by a user to provide input to the mobile terminal 100. The first and second manipulation units 123a and 123b may also be commonly referred to as a manipulating portion, and may employ any tactile method that allows the user to perform manipulation such as touch, push, scroll, or the like. The first and second manipulation units 123a and 123b may also employ any non-tactile method that allows the user to perform manipulation such as proximity touch, hovering, or the like.

FIG. 1B illustrates the first manipulation unit 123a as a touch key, but possible alternatives include a mechanical key, a push key, a touch key, and combinations thereof.

Input received at the first and second manipulation units 123a and 123b may be used in various ways. For example, the first manipulation unit 123a may be used by the user to provide an input to a menu, home key, cancel, search, or the like, and the second manipulation unit 123b may be used by the user to provide an input to control a volume level being output from the first or second audio output modules 152a or 152b, to switch to a touch recognition mode of the display unit 151, or the like.

As another example of the user input unit 123, a rear input unit (not shown) may be located on the rear surface of the terminal body. The rear input unit can be manipulated by a user to provide input to the mobile terminal 100. The input may be used in a variety of different ways. For example, the rear input unit may be used by the user to provide an input for power on/off, start, end, scroll, control volume level being output from the first or second audio output modules 152a or 152b, switch to a touch recognition mode of the display unit 151, and the like. The rear input unit may be configured to permit touch input, a push input, or combinations thereof.

The rear input unit may be located to overlap the display unit 151 of the front side in a thickness direction of the terminal body. As one example, the rear input unit may be located on an upper end portion of the rear side of the terminal body such that a user can easily manipulate it using a forefinger when the user grabs the terminal body with one hand. Alternatively, the rear input unit can be positioned at most any location of the rear side of the terminal body.

Embodiments that include the rear input unit may implement some or all of the functionality of the first manipulation unit 123a in the rear input unit. As such, in situations where the first manipulation unit 123a is omitted from the front side, the display unit 151 can have a larger screen.

As a further alternative, the mobile terminal 100 may include a finger scan sensor which scans a user's fingerprint. The controller 180 can then use fingerprint information sensed by the finger scan sensor as part of an authentication procedure. The finger scan sensor may also be installed in the display unit 151 or implemented in the user input unit 123.

The microphone 122 is shown located at an end of the mobile terminal 100, but other locations are possible. If desired, multiple microphones may be implemented, with such an arrangement permitting the receiving of stereo sounds.

The interface unit 160 may serve as a path allowing the mobile terminal 100 to interface with external devices. For example, the interface unit 160 may include one or more of a connection terminal for connecting to another device (for example, an earphone, an external speaker, or the like), a port for near field communication (for example, an Infrared Data Association (IrDA) port, a Bluetooth port, a wireless LAN port, and the like), or a power supply terminal for supplying power to the mobile terminal 100. The interface unit 160 may be implemented in the form of a socket for accommodating an external card, such as Subscriber Identification Module (SIM), User Identity Module (UIM), or a memory card for information storage.

The second camera 121b is shown located at the rear side of the terminal body and includes an image capturing direction that is substantially opposite to the image capturing direction of the first camera unit 121a. If desired, second camera 121a may alternatively be located at other locations, or made to be moveable, in order to have a different image capturing direction from that which is shown.

The second camera 121b can include a plurality of lenses arranged along at least one line. The plurality of lenses may also be arranged in a matrix configuration. The cameras may be referred to as an "array camera." When the second camera 121b is implemented as an array camera, images may be captured in various manners using the plurality of lenses and images with better qualities.

As shown in FIG. 1C, a flash 124 is shown adjacent to the second camera 121b. When an image of a subject is captured with the camera 121b, the flash 124 may illuminate the subject.

As shown in FIG. 1B, the second audio output module 152b can be located on the terminal body. The second audio output module 152b may implement stereophonic sound functions in conjunction with the first audio output module 152a, and may be also used for implementing a speaker phone mode for call communication.

At least one antenna for wireless communication may be located on the terminal body. The antenna may be installed in the terminal body or formed by the case. For example, an antenna which configures a part of the broadcast receiving module 111 may be retractable into the terminal body. Alternatively, an antenna may be formed using a film attached to an inner surface of the rear cover 103, or a case that includes a conductive material.

A power supply unit 190 for supplying power to the mobile terminal 100 may include a battery 191, which is mounted in the terminal body or detachably coupled to an outside of the terminal body. The battery 191 may receive power via a power source cable connected to the interface unit 160. Also, the battery 191 can be recharged in a wireless manner using a wireless charger. Wireless charging may be implemented by magnetic induction or electromagnetic resonance.

The rear cover 103 is shown coupled to the rear case 102 for shielding the battery 191, to prevent separation of the battery 191, and to protect the battery 191 from an external impact or from foreign material. When the battery 191 is detachable from the terminal body, the rear case 103 may be detachably coupled to the rear case 102.

An accessory for protecting an appearance or assisting or extending the functions of the mobile terminal 100 can also be provided on the mobile terminal 100. As one example of an accessory, a cover or pouch for covering or accommodating at least one surface of the mobile terminal 100 may be provided. The cover or pouch may cooperate with the display unit 151 to extend the function of the mobile terminal 100. Another example of the accessory is a touch pen for assisting or extending a touch input to a touch screen.

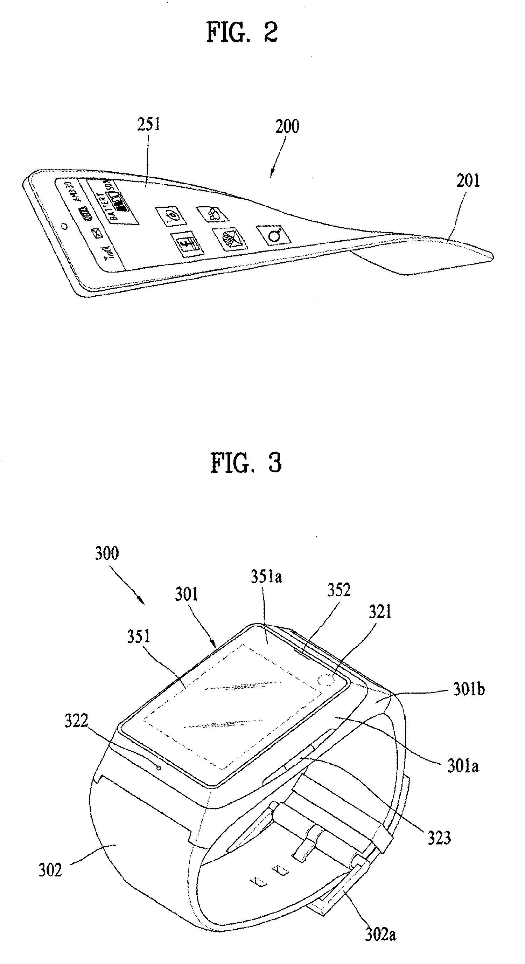

FIG. 2 is a conceptual view of a deformable mobile terminal according to an alternative embodiment of the present invention. In this figure, mobile terminal 200 is shown having display unit 251, which is a type of display that is deformable by an external force. This deformation, which includes display unit 251 and other components of mobile terminal 200, may include any of curving, bending, folding, twisting, rolling, and combinations thereof. The deformable display unit 251 may also be referred to as a "flexible display unit." In some implementations, the flexible display unit 251 may include a general flexible display, electronic paper (also known as e-paper), and combinations thereof. In general, mobile terminal 200 may be configured to include features that are the same or similar to that of mobile terminal 100 of FIGS. 1A-1C.

The flexible display of mobile terminal 200 is generally formed as a lightweight, non-fragile display, which still exhibits characteristics of a conventional flat panel display, but is instead fabricated on a flexible substrate which can be deformed as noted previously.

The term e-paper may be used to refer to a display technology employing the characteristic of a general ink, and is different from the conventional flat panel display in view of using reflected light. E-paper is generally understood as changing displayed information using a twist ball or via electrophoresis using a capsule.

When in a state that the flexible display unit 251 is not deformed (for example, in a state with an infinite radius of curvature and referred to as a first state), a display region of the flexible display unit 251 includes a generally flat surface. When in a state that the flexible display unit 251 is deformed from the first state by an external force (for example, a state with a finite radius of curvature and referred to as a second state), the display region may become a curved surface or a bent surface. As illustrated, information displayed in the second state may be visual information output on the curved surface. The visual information may be realized in such a manner that a light emission of each unit pixel (sub-pixel) arranged in a matrix configuration is controlled independently. The unit pixel denotes an elementary unit for representing one color.

According to one alternative embodiment, the first state of the flexible display unit 251 may be a curved state (for example, a state of being curved from up to down or from right to left), instead of being in flat state. In this embodiment, when an external force is applied to the flexible display unit 251, the flexible display unit 251 may transition to the second state such that the flexible display unit is deformed into the flat state (or a less curved state) or into a more curved state.

If desired, the flexible display unit 251 may implement a flexible touch screen using a touch sensor in combination with the display. When a touch is received at the flexible touch screen, the controller 180 can execute certain control corresponding to the touch input. In general, the flexible touch screen is configured to sense touch and other input while in both the first and second states.

One option is to configure the mobile terminal 200 to include a deformation sensor which senses the deforming of the flexible display unit 251. The deformation sensor may be included in the sensing unit 140.

The deformation sensor may be located in the flexible display unit 251 or the case 201 to sense information related to the deforming of the flexible display unit 251. Examples of such information related to the deforming of the flexible display unit 251 may be a deformed direction, a deformed degree, a deformed position, a deformed amount of time, an acceleration that the deformed flexible display unit 251 is restored, and the like. Other possibilities include most any type of information which can be sensed in response to the curving of the flexible display unit or sensed while the flexible display unit 251 is transitioning into, or existing in, the first and second states.

In some embodiments, controller 180 or other component can change information displayed on the flexible display unit 251, or generate a control signal for controlling a function of the mobile terminal 200, based on the information related to the deforming of the flexible display unit 251. Such information is typically sensed by the deformation sensor.

The mobile terminal 200 is shown having a case 201 for accommodating the flexible display unit 251. The case 201 can be deformable together with the flexible display unit 251, taking into account the characteristics of the flexible display unit 251.

A battery (not shown in this figure) located in the mobile terminal 200 may also be deformable in cooperation with the flexible display unit 261, taking into account the characteristic of the flexible display unit 251. One technique to implement such a battery is to use a stack and folding method of stacking battery cells.

The deformation of the flexible display unit 251 not limited to perform by an external force. For example, the flexible display unit 251 can be deformed into the second state from the first state by a user command, application command, or the like.

In accordance with still further embodiments, a mobile terminal may be configured as a device which is wearable on a human body. Such devices go beyond the usual technique of a user grasping the mobile terminal using their hand. Examples of the wearable device include a smart watch, a smart glass, a head mounted display (HMD), and the like.

A typical wearable device can exchange data with (or cooperate with) another mobile terminal 100. In such a device, the wearable device generally has functionality that is less than the cooperating mobile terminal. For instance, the short-range communication module 114 of a mobile terminal 100 may sense or recognize a wearable device that is near-enough to communicate with the mobile terminal. In addition, when the sensed wearable device is a device which is authenticated to communicate with the mobile terminal 100, the controller 180 may transmit data processed in the mobile terminal 100 to the wearable device via the short-range communication module 114, for example. Hence, a user of the wearable device can use the data processed in the mobile terminal 100 on the wearable device. For example, when a call is received in the mobile terminal 100, the user can answer the call using the wearable device. Also, when a message is received in the mobile terminal 100, the user can check the received message using the wearable device.

FIG. 3 is a perspective view illustrating one example of a watch-type mobile terminal 300 in accordance with another exemplary embodiment. As illustrated in FIG. 3, the watch-type mobile terminal 300 includes a main body 301 with a display unit 351 and a band 302 connected to the main body 301 to be wearable on a wrist. In general, mobile terminal 300 may be configured to include features that are the same or similar to that of mobile terminal 100 of FIGS. 1A-1C.

The main body 301 may include a case having a certain appearance. As illustrated, the case may include a first case 301a and a second case 301b cooperatively defining an inner space for accommodating various electronic components. Other configurations are possible. For instance, a single case may alternatively be implemented, with such a case being configured to define the inner space, thereby implementing a mobile terminal 300 with a uni-body.

The watch-type mobile terminal 300 can perform wireless communication, and an antenna for the wireless communication can be installed in the main body 301. The antenna may extend its function using the case. For example, a case including a conductive material may be electrically connected to the antenna to extend a ground area or a radiation area.

The display unit 351 is shown located at the front side of the main body 301 so that displayed information is viewable to a user. In some embodiments, the display unit 351 includes a touch sensor so that the display unit can function as a touch screen. As illustrated, window 351a is positioned on the first case 301a to form a front surface of the terminal body together with the first case 301a.

The illustrated embodiment includes audio output module 352, a camera 321, a microphone 322, and a user input unit 323 positioned on the main body 301. When the display unit 351 is implemented as a touch screen, additional function keys may be minimized or eliminated. For example, when the touch screen is implemented, the user input unit 323 may be omitted.

The band 302 is commonly worn on the user's wrist and may be made of a flexible material for facilitating wearing of the device. As one example, the band 302 may be made of fur, rubber, silicon, synthetic resin, or the like. The band 302 may also be configured to be detachable from the main body 301. Accordingly, the band 302 may be replaceable with various types of bands according to a user's preference.

In one configuration, the band 302 may be used for extending the performance of the antenna. For example, the band may include therein a ground extending portion (not shown) electrically connected to the antenna to extend a ground area.

The band 302 may include fastener 302a. The fastener 302a may be implemented into a buckle type, a snap-fit hook structure, a Velcro® type, or the like, and include a flexible section or material. The drawing illustrates an example that the fastener 302a is implemented using a buckle.

Hereinafter, embodiments associated with a control method which can be implemented in the mobile terminal having the aforementioned configuration will be described with reference to the attached drawings. It should be understood by those skilled in the art that the present invention can be embodied in other specific forms without departing from the concept and essential characteristics thereof.

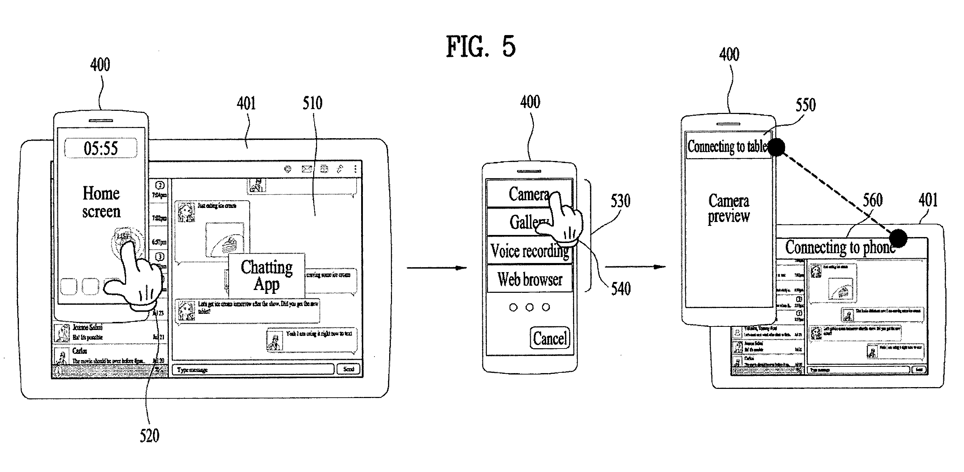

A mobile terminal and a display device that will be described with reference to FIGs. 5 to 19 can be implemented as one of the mobile terminals 100, 200, and 300 in FIGs. 1 to 3. However, in FIGs. 5 to 19, it is assumed that the mobile terminal is a smart phone and the display device is a tablet. That is, FIGs. 5 to 19 illustrates an example in which a size of the mobile terminal is smaller than that of a display unit of the display device.

In the following description, the embodiments of the present invention will be explained with reference to FIGs. 5 to 19. In addition, the foregoing description with reference to FIGs. 1 to 3 is provided for ease in description and understanding of the embodiments of the present invention.

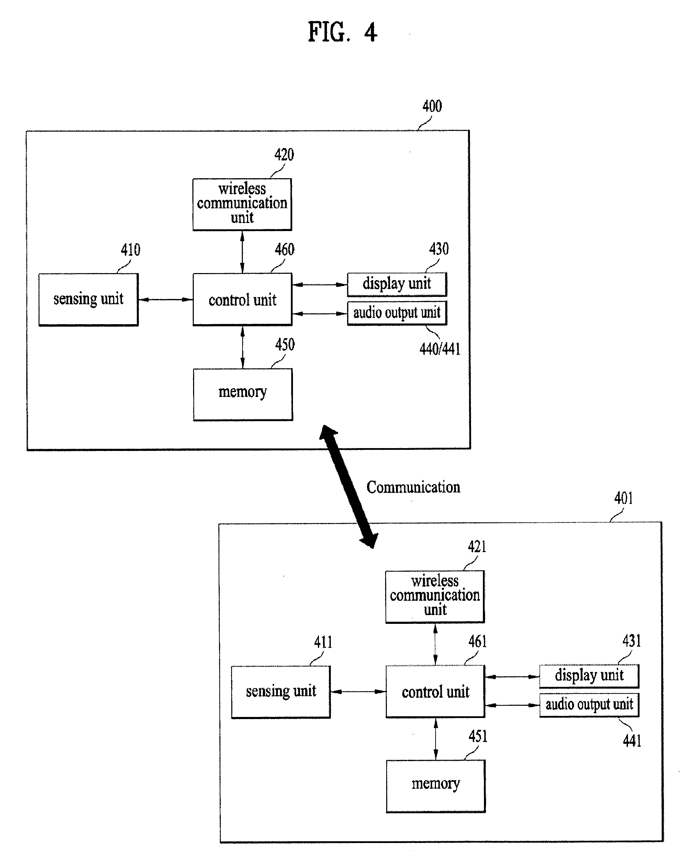

FIG. 4 is a block diagram for explaining configuration modules of a mobile terminal and a display device according to an embodiment of the present invention.

Referring to FIG. 4, a mobile terminal 400 according to an embodiment of the present invention may include a sensing unit 410, a wireless communication unit 420, a display unit 430, an audio output unit 440, a memory 450, and a control unit 460. And, a display device 401 according to an embodiment of the present invention may include a sensing unit 411, a wireless communication unit 421, a display unit 431, an audio output unit 441, a memory 451, and a control unit 461.

The sensor unit 410 of the mobile terminal 400 may be configured to sense not only various user inputs inputted into the mobile terminal but also an environment of the mobile terminal and deliver a sensing result in order to enable the control unit 460 to perform an operation in accordance with the sensing result. In the present invention, the sensing unit 410 of the mobile terminal 400 can be implemented as a touch-screen by being attached to the display unit 430. Moreover, the sensing unit 410 can be implemented as the sensing unit 140 of FIG. 1A. In an embodiment of the present invention, the sensing unit 410 of the mobile terminal 400 may be configured to detect whether the mobile terminal 400 satisfies a predetermined location condition of a second display unit 431 of the display device 401. To this end, the sensing unit 410 of the mobile terminal 400 may further include a proximity sensor and an infrared sensor. Details will be described in the following with reference to FIG. 5.

The wireless communication unit 420 of the mobile terminal 400 may be configured to perform communication and transmit/receive data signals based on various protocols between the mobile terminal 400 and the display device 401. In the present invention, the wireless communication unit 420 of the mobile terminal can be implemented as the wireless communication unit 110 of FIG. 1A. That is, the mobile terminal 400 may transceive data with the display device 401 by using one of the broadcast reception module 111, the mobile communication module 112, the wireless Internet module 113, and the short-range communication module 114 through the wireless communication unit 420. In an embodiment of the present invention, the wireless communication unit 420 of the mobile terminal 400 may be configured to receive a signal corresponding to a content currently executed in the display device 401. Moreover, in an embodiment of the present invention, the wireless communication unit 420 of the mobile terminal 400 may be configured to transmit a control signal to the wireless communication unit 421 of the display device 401.

A first display unit 430 of the mobile terminal 400 may be configured to display visual information. Here, the visual information may include a text, an indicator, an icon, a content, an application, an image, a video and the like. In addition, the first display unit 430 of the mobile terminal 400 may output the visual information to a screen based on a control command from the control unit 460. In the present invention, the display unit 430 can be implemented as the display unit 151 of FIG. 1A. In an embodiment of the present invention, the first display unit 430 of the mobile terminal 400 may be configured to output a list of contents linkable to the content currently executed in the display device 401 by sensing an input signal.

The audio output unit 440 of the mobile terminal 400 may be configured to output audio data received through the wireless communication unit 420 of the mobile terminal 400 or audio data stored in the memory 450, which will be described in the following, of the mobile terminal 400. In the present invention, the audio output unit 440 can be implemented as the audio output unit 152 of FIG. 1A. In an embodiment of the present invention, the audio output unit 440 of the mobile terminal 400 may be configured to output the audio data stored in the memory 450 of the mobile terminal 400 or the audio data received through the wireless communication unit 420 of the mobile terminal 400 by sensing an input signal.

The memory 450 of the mobile terminal 400 may be configured to store data to support various functions of the mobile terminal 400. In the present invention, the memory 450 can be implemented as the memory 170 of FIG. 1A. In an embodiment of the present invention, the memory 450 may be configured to store a content currently executed in the mobile terminal 400 and a sub-list of the content.

The control unit 460 of the mobile terminal 400 may be configured to perform data processing, control the above-mentioned individual units of the mobile terminal 400, and control data transmission/reception between the units. In the present invention, the control unit 460 can be implemented as the controller 180 of FIG. 1A.

As an embodiment of the present invention, operations performed by the mobile terminal 400 may be controlled by the control unit 460 of the mobile terminal 400. However, for convenience of description, the above operations may be considered as being performed/controlled by the mobile terminal 400 in the following.

For details of the sensing unit 411, the wireless communication unit 421, the display unit 431, the audio output unit 441, the memory 451 and the control unit 461 of the display device 401, refer to the above description of the sensing unit 410, the wireless communication unit 420, the display unit 430, the audio output unit 440, the memory 450 and the control unit 460 of the mobile terminal 400.

As an embodiment of the present invention, operations performed by the display device 401 may be controlled by the control unit 461 of the display device 401. However, for convenience of description, the above operations may be considered as being performed/controlled by the display device 401 in the following.

In particular, as an embodiment of the present invention, the mobile terminal 400 and the display device 401 may transceive signals through a wireless network such as BLE (Bluetooth Low Energy), Wi-Fi Direct or the like. In the following description, assume that the mobile terminal 400 and the display device 401 are paired with each other. In this case, each of the mobile terminal 400 and the display device 401 may be configured to store information on the other. For instance, each of the mobile terminal 400 and the display device 401 may store a size, a body case color of the other.

In an embodiment of the present invention, each of the mobile terminal 400 and the display device 401 is configured to store the information on the other in the memory 450/451 different from a case in which each of them is paired with an external device. Thus, even though Bluetooth or Wi-Fi Direct is set to OFF, the mobile terminal 400 and the display device 401 can always maintain pairing therebetween through a pairing configuration.

To distinguish between the mobile terminal 400 and the display device 401, the sensing unit 410, the wireless communication unit 420, the display unit 430, the audio output unit 440, the memory 450 and the control unit 460 of the mobile terminal 400 can be referred to as a first sensing unit 410, a first wireless communication unit 420, a first display unit 430, a first audio output unit 440, a first memory 450 and a first control unit 460, respectively. And, the sensing unit 411, the wireless communication unit 421, the display unit 431, the audio output unit 441, the memory 451 and the control unit 461 of the display device 401 can be referred to as a second sensing unit 411, a second wireless communication unit 421, a second display unit 431, a second audio output unit 441, a second memory 451 and a second control unit 461, respectively.

### Content Sharing between Mobile Terminal and Display Device

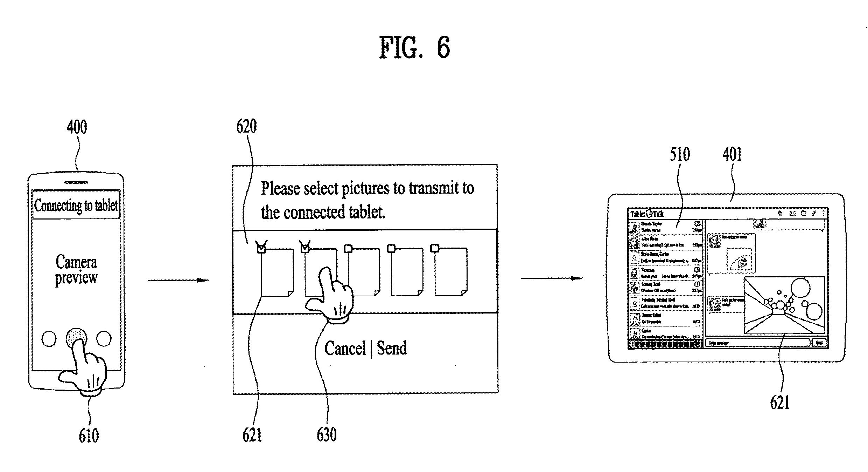

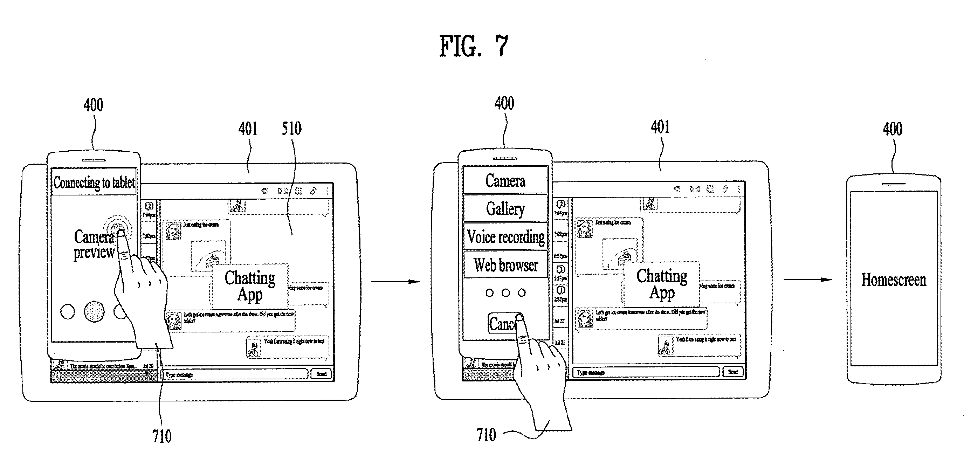

FIGs. 5 to 7 illustrate an example of sharing data through a content link and an example of terminating the content link in a situation that the mobile terminal and the display device are paired with each other. More particularly, FIG. 5 shows an example of generating the content link between the mobile terminal and the display device, FIG. 6 shows an example of transmitting an image captured by a camera application of the mobile terminal through a chat application of the display device, and FIG. 7 shows an example of terminating the content link between the mobile terminal and the display device.

FIG. 5 is a diagram for explaining an example of generating a content link between a mobile terminal and a display device according to an embodiment of the present invention. Overlapping description with the embodiments of FIG. 4 will be omitted in the following.

Referring to the first drawing in FIG. 5, the mobile terminal 400 may detect that a terminal body of the mobile terminal satisfies a predetermined location condition of the second display unit of the display device 401. Here, the predetermined location condition may mean that the mobile terminal 400 is overlaid with at least a partial area of the second display unit of the display device 401.

More particularly, the predetermined location condition may mean a condition in which the terminal body of the mobile terminal 400 is overlaid with a predetermined area of the second display unit of the display device 401 and the terminal body of the mobile terminal 400 is located within a predetermined vertical distance from the second display unit of the display device 401. That is, when the mobile terminal 400 and the display device 401 are located within a range capable of sensing each other, whether the mobile terminal 400 satisfies the predetermined location condition is sensed. For instance, while positioning the display device 401 such that the front side including the second display unit of the display device 401 faces upward, a user may position the mobile terminal 400 on a prescribed area of the second display unit of the display device 401 such that the front side containing the first display unit of the mobile terminal 400 also faces upward.

In addition, in an embodiment of the present invention, the display device 401 may also detect whether the terminal body of the mobile terminal 400 covers the predetermined area of the second display unit of the display device 401. More particularly, since the display device 401 already has information on a size of the mobile terminal 400, the display device 401 may detect which portion of the second display unit of the display device 401 is covered by the mobile terminal 400.

In an embodiment of the present invention, the mobile terminal 400 and the display device 401 may be paired with each other when each of them detects that the mobile terminal 400 satisfies the predetermined location condition of the second display unit of the display device 401. Moreover, after the mobile terminal 400 and the display device 401 are paired with each other, even if the mobile terminal 400 does not satisfy the predetermined location condition, the pairing can be maintained.

In an embodiment of the present invention, after detecting that the mobile terminal 400 satisfies the predetermined location condition of the second display unit of the display device 401, the mobile terminal 400 may receive a signal corresponding to a first content 510 currently executed in the display device 401 through the first wireless communication unit. In detail, the mobile terminal 400 may receive information on the first content 510 from the display device 401.

For example, the first content 510 may be a chat application. In this case, the mobile terminal 400 may obtain a state of the chat application executed in the display device 401.

Moreover, in an embodiment of the present invention, while running the first content 510, the display device 401 may detect whether the mobile terminal 400 satisfies the predetermined location condition. After detecting that the mobile terminal 400 satisfies the predetermined location condition, the display device 401 may transmit the information corresponding to the currently running first content 510 to the mobile terminal 400 through the second wireless communication unit. For instance, if the first content 510 executed in the display device 401 is a chat application, the display device 401 may transmit execution information of the chat application to the mobile terminal 400.

In an embodiment of the present invention, while recognizing the first content 510, the mobile terminal 400 may sense a first input signal 520. Here, the first input signal 520 may be a predetermined touch input signal of touching the first display unit. Moreover, the mobile terminal 400 may sense the first input signal 520 when a home screen is displayed on the first display unit as well as when the first display unit is deactivated. Here, the deactivated state may mean that the first display unit is turned off.

For instance, the first input signal 520 may be an input signal of touching a predetermined area with a predetermined pressure. That is, the first input signal 520 may correspond to a touch input signal of selecting an icon displayed on the first display unit of the mobile terminal 400. More particularly, the mobile terminal 400 may output the home screen to the first display unit and the home screen may include at least one icon. For example, a user may perform deep-press-touch on a 'LIST' icon displayed on the first display unit.

Referring to the second drawing in FIG. 5, after sensing the first input signal 520, the mobile terminal 400 may output a list 530 of contents linkable to the first content 510 to the first display unit. Here, the list 530 of the linkable contents may be a list of one or more contents related to the first content 510 currently executed in the display device 401. For instance, if the first content 510 is a chat application, the content list 530 may correspond to a list of applications available in the chat application. For instance, a camera application, a gallery application, a voice recording application, a web browser application, etc. may be included in the content list 530.

In an embodiment of the present invention, while outputting the content list 530, the mobile terminal 400 may sense a second input signal 540 of selecting a second content included in the content list 530. Here, the second input signal 540 may be an input signal of touching the second content in the content list 530. For instance, a user may select 'camera application' from the content list 530.

Referring to the third drawing in FIG. 5, after sensing the second input signal 540, the mobile terminal 400 may execute the second content. For instance, the second content may be a camera application. In this case, the mobile terminal 400 may display a camera preview photographed by a camera on the first display unit. In an embodiment of the present invention, the second content executed in the mobile terminal 400 may be linked to the first content 510 executed in the display device 401. Details will be described with reference to FIG. 6. After executing the second content, the mobile terminal 400 can maintain the link with the display device 401 even if the mobile terminal does not satisfy the predetermined location condition.

In an embodiment of the present invention, the mobile terminal 400 may display a first notification 550 on the top portion of the first display unit to notify that the mobile terminal 400 is linked to the display device 401. Moreover, the display device 4010 may display a second notification 560 on the top portion of the second display unit to notify that the display device 401 is linked to the mobile terminal 400. For instance, the mobile terminal 400 may display a message saying "linked to the tablet" on a bar at the top of the first display unit and the display device 401 may display a message saying "linked to the phone" on a bar at the top of the second display unit.

FIG. 6 is a diagram for explaining an example of transceiving pictures between a mobile terminal and a display device according to an embodiment of the present invention. Overlapping description with the embodiments of FIGs. 4 and 5 will be omitted in the following.

The first drawing in FIG. 6 matches the third drawing in FIG. 5. Referring to the first drawing in FIG. 6, the mobile terminal 400 may display the camera preview photographed by the camera on the first display unit. In an embodiment of the present invention, the mobile terminal 400 may sense a first input signal 610 of capturing an image from the photographed camera preview.

Referring to the second drawing in FIG. 6, after sensing the first input signal 610, the mobile terminal 400 may output a list 620 of pictures to be transmitted to the display device 410. Here, the images captured in the manner as described with reference to the first drawing in FIG. 6 and images stored in the mobile terminal 400 may be included in the picture list 620. In an embodiment of the present invention, the mobile terminal 400 may sense a second input signal 630 of selecting a picture to be transmitted. Here, the second input signal 630 may correspond to at least one touch input signal.

Thereafter, the mobile terminal 400 may sense a third input signal for transmitting a selected picture 621 to the display device 401. For instance, a user may select the picture 621 to be transmitted from the mobile terminal 400 to the display device 401 and then touch a 'SEND' icon.

Referring to the third drawing in FIG. 6, after sensing the third input signal, the mobile terminal 400 may transmit the selected picture 621 to the display device 401. Particularly, in an embodiment of the present invention, the mobile terminal 400 may transmit the selected picture 621 to the first content 510 executed in the display device 401.

In addition, according to another embodiment, the second drawing in FIG. 6 can be omitted. That is, the mobile terminal 400 may sense the first input signal 610 of capturing an image from the photographed camera preview in the manner as described with reference to the first drawing in FIG. 6. Thereafter, the mobile terminal 400 may skip the procedure described with reference to the second drawing in FIG. 6 and then perform the procedure mentioned with reference to the third drawing in FIG. 6. In other words, after sensing the first input signal 610, the mobile terminal 400 may transmit the captured picture to the display device 401 as described with reference to the third drawing in FIG. 6. After receiving the captured picture, the display device 401 may forward the capture picture to the first content 510.

In an embodiment of the present invention, after receiving the selected picture 621 from the mobile terminal 400, the display device 401 may display the selected picture 621 on the first content 510. In other words, if the display device 401 receives the selected picture 621 from the mobile terminal 400 while running the first content 510, the display device 401 may display the selected picture 621 on the first content 510. For instance, if the first content 510 is a chat application, the display device 401 may display the selected picture 621 on a chat window.

Therefore, a user of the mobile terminal 400 and the display device 401 may transmit the picture stored in the mobile terminal 400 or the high-resolution picture photographed by the mobile terminal 400 to another user through the display device 401.

Although not shown in the drawings, if the second content linked to the first content 510 is a gallery application, the procedures described with reference to the first drawing in FIG. 6 can be omitted. Moreover, if the second content is a voice recording application, the display device 401 may output recorded voice data to the chat window. Similarly, if the second content is a web browser application, the display device 401 may output a search result to the chat window.

That is, according to one embodiment of the present invention, the display device 401 may output a result of the second content executed in the mobile terminal 400 through the first content 510.

FIG. 7 is a diagram for explaining an example of terminating a content link between a mobile terminal and a display device according to an embodiment of the present invention. Moreover, overlapping description with the embodiments of FIGs. 4 to 6 will be omitted in the following.

The first drawing in FIG. 7 matches the third drawing in FIG. 5. Referring to the first drawing in FIG. 7, while running the second content linked to the first content 510, the mobile terminal 400 may sense a second input signal 710. Moreover, as another embodiment, while the mobile terminal 400 satisfies a predetermined location condition of the second display unit of the display device 401, the mobile terminal 400 may sense the second input signal 710. Here, the second input signal 710 may be a predetermined touch input signal. In particular, the second input signal 710 may coincide with the first input signal 520 of the first drawing in FIG. 5.

For instance, if a user performs deep-press-touch on the first display unit of the mobile terminal 400 while the first content 510 is executed in the display device 401, the mobile terminal 400 may display the list 530 of the contents linkable to the first content 510 and then the user may use the second content linked to the first content 510. If the user of the mobile terminal 400 intends to terminate the content link with the display device 401, the user may perform deep-press-touch on the first display unit while the second content is executed.

Referring to the second drawing in FIG. 7, after sensing the second input signal 710, the mobile terminal 400 may terminate execution of the second content and then display the linkable content list 530. In an embodiment of the present invention, the mobile terminal 400 may display the linkable content list 530 and a 'CANCEL' icon at the same time. The mobile terminal 400 may sense a third input signal 710 of selecting the 'CANCEL' icon. For instance, the user may touch the 'CANCEL' icon displayed on the first display unit of the mobile terminal 400.

Referring to the third drawing in FIG. 7, after sensing the third input signal 710, the mobile terminal 400 may terminate the content link with the display device 401. In an embodiment of the present invention, after sensing the third input signal 710, the mobile terminal 400 may transmit a signal for controlling the display device 401 to terminate the content link. Thereafter, the mobile terminal 400 may display the home screen on the first display unit.

### Combination of Lists Displayed in Mobile Terminal and Display Device

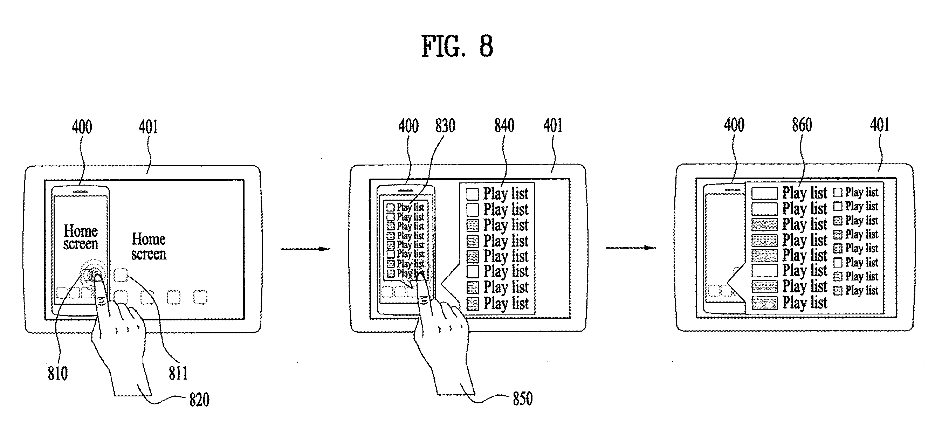

FIG. 8 illustrate operations of a mobile terminal and a display device according to an embodiment of the present invention. Referring to FIG. 8, while the mobile terminal and the display device execute the same content, if an input signal is inputted, the mobile terminal and the display device display a sub-list stored in the first memory and a sub-list stored in the second memory, respectively. Thereafter, the two sub-lists may be combined by anyone of the mobile terminal and the display device.

FIG. 8 is a diagram for explaining an example of displaying a sub-list of contents included in a mobile terminal and a display device according to an embodiment of the present invention. Overlapping description with the embodiments of FIGs. 4 to 7 will be omitted in the following.

Referring to the first drawing in FIG. 8, the mobile terminal 400 and the display device 401 may display the same content 810 and 811. While displaying the content 810 on the first display unit, the mobile terminal 400 may detect whether the mobile terminal 400 satisfies a predetermined location condition of the second display unit of the display device. If the mobile terminal 400 satisfies the predetermined location condition of the second display unit of the display device 401, the display device 401 may transmit information on the currently executed content 811 to the mobile terminal 400. For instance, the content 810 and 811 executed in both of the mobile terminal 400 and the display device 401 may be a music playback application.

In an embodiment of the present invention, while satisfying the predetermined location condition of the second display unit of the display device 401, the mobile terminal 400 may sense a first input signal 820 of selecting the displayed content 810. Here, the first input signal 820 may be a touch input signal of touching a predetermined area with a predetermined pressure.

Referring to the second drawing in FIG. 8, after sensing the first input signal 820, the mobile terminal 400 may display a first sub-list 830 of the content 810. Here, the first sub-list 830 may correspond to data stored in the first memory of the mobile terminal 400. In addition, the first sub-list 830 may correspond to data received from an external device or a server. For instance, if the content 810 is the music playback application, the first sub-list 830 may be a music playback list of the mobile terminal 400.

Additionally, after sensing the first input signal 820, the mobile terminal 400 may transmit a signal for controlling the display device 401 to display a second sub-list 840 of the content 811 on the second display unit to the display device 401. Subsequently, the display device 401 may output the second sub-list 840 of the content 811 to the second display unit. Here, the second sub-list 840 may correspond to data stored in the second memory of the display device 401. In addition, the second sub-list 840 may correspond to data received from an external device or a server. For instance, if the content 811 is the music playback application, the second sub-list 840 may be a music playback list of the display device 401.

In an embodiment of the present invention, according to the first input signal sensed by the mobile terminal 400, the mobile terminal 400 may output the first sub-list 830 and the display device 401 may output the second sub-list 840. Thereafter, the mobile terminal 400 may sense a second input signal 850 of selecting the first sub-list. Here, the second input signal 850 may be a predetermined input signal. For instance, the second input signal 850 may be an input signal of touching a predetermined area with a predetermined pressure.

Referring to the third drawing in FIG. 8, after sensing the second input signal 850, the mobile terminal 400 may display a third sub-list 860 that contains both entries included in the first sub-list 830 and entries included in the second sub-list 840 on the first display unit. Moreover, referring back to the second drawing in FIG. 8, if the display device 401 senses a third input signal for selecting the second sub-list 840, the display device 401 may output the third sub-list 860 containing both of the entries included in the first sub-list 830 and the entries included in the second sub-list 840 on the second display unit.

Although not shown in the drawings, if the mobile terminal 400 senses a fourth input signal while displaying the third sub-list 860 on the first display unit, the mobile terminal 400 may play back entries included in the third sub-list 860 through the first audio output unit. In this case, to play back the entries of the second sub-list 840 among the entries of the third sub-list 860, the mobile terminal 400 may receive the corresponding data from the display device 401. Similarly, if the display device 401 senses a fifth input signal while displaying the third sub-list 860 on the second display unit, the display device 401 may play back the entries included in the third sub-list 860 through the second audio output unit.

Accordingly, the user of the mobile terminal 400 and the display device 401 may output one list containing all the entries displayed in the two different devices to anyone of the two different devices and then use the list.

### Mobile Terminal for Searching for Items Displayed in Display Device

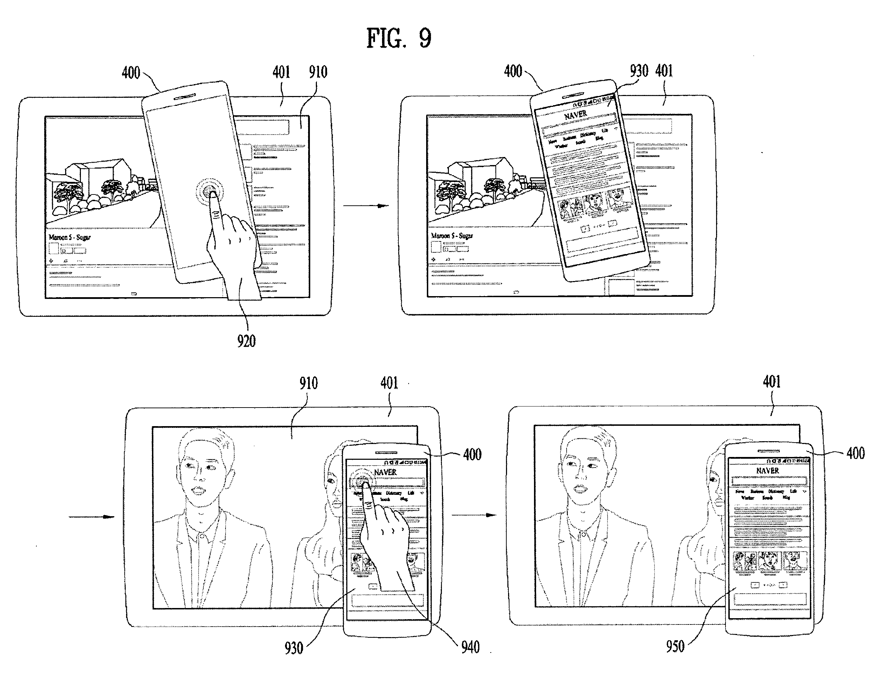

FIG. 9 illustrates operations of a mobile terminal and a display device according to an embodiment of the present invention. Referring to FIG. 9, while the display device executes a content, if the mobile terminal detects that the mobile terminal satisfies a predetermined location condition of the display unit of the display device, the mobile terminal may receive a signal corresponding to the content executed in the display device from the display device and then search for an item included in the content. Hereinafter, although it is assumed that the content currently executed in the display device is a video playback application, all types of contents with searchable items may be applied.

FIG. 9 is a diagram for explaining an example of executing a content to search for an item included in a content currently executed in a display device using a mobile terminal according to an embodiment of the present invention. Overlapping description with the embodiments of FIGs. 4 to 8 will be omitted in the following.

Referring to the first drawing in FIG. 9, the display device 401 may display a first content 910 on the second display unit. In addition, the mobile terminal 400 may detect that the mobile terminal 400 satisfies the predetermined location condition of the second display unit of the display device 401. Here, the predetermined location condition may mean that the mobile terminal 400 is overlaid with at least a part of a display area for the first content 910 executed in the display device 401. For instance, if the mobile terminal 400 hovers over the display area for the first content 910 played back on the second display unit, the mobile terminal 400 may detect that the predetermined location condition is satisfied.

In an embodiment of the present invention, when detecting that the mobile terminal 400 satisfies the predetermined location condition, the mobile terminal 400 may receive a signal corresponding to the first content 910 executed in the display device 401. For instance, the mobile terminal 400 may receive information on a video playback application from the display device 401. Moreover, the mobile terminal 400 may receive information on an item included in the video playback application from the display device 401.

In an embodiment of the present invention, after receiving the signal corresponding to the first content 910, the mobile terminal 400 may sense a first input signal 920. In this case, the mobile terminal 400 may sense the first input signal 920 when the home screen is displayed on the first display unit as well as when the first display unit is deactivated. Here, the first input signal 920 may be an input signal of touching a predetermined area of the first display unit of the mobile terminal 400 with a predetermined pressure.

Referring to the second drawing in FIG. 9, after sensing the first input signal 920, the mobile terminal 400 may execute a second content 930. Here, the second content 930 may be a web browser application for searching an item included in the first content 910. Moreover, the second content 930 may be a predetermined content of the mobile terminal 400. That is, while the first display unit is deactivated, the mobile terminal 400 may output the second content 930 immediately after sensing the first input signal 920. Moreover, while the home screen is displayed on the first display unit, if sensing the first input signal 920, the mobile terminal 400 may switch the home screen to a screen for displaying the second content 930.

Referring to the third drawing in FIG. 9, the mobile terminal 400 may sense a second input signal 940 while displaying the second content 930. Here, the second input signal 940 may be an input signal of touching a search window included in the second content 930. For instance, a user may perform deep-press-touch on the search window included in the second content 930. That is, the user may not have to type a name of the item included in the first content 910.

Referring to the fourth drawing in FIG. 9, after sensing the second input signal 940, the mobile terminal 400 may output a search result 950 of retrieving the item included in the first content 910 through the second content 930. For instance, if the first content 910 is 'Drama A' and the item included in the first content 910 is 'Earrings of Actress B', the mobile terminal 400 may display the search result 950 of 'Earrings of Actress B' on the second content 930 after sensing the second input signal 940.

In other words, the user can search for the item included in the first content 910 without typing the name of the item in the search window included in the second content 930.

Additionally, another embodiment of the present invention is described with reference to the first to fourth drawings of FIG. 9. While the mobile terminal 400 does not satisfy the predetermined location condition of the second display unit of the display device 401, the mobile terminal 400 may sense the first and second input signals 920 and 940.

Thereafter, the user can check the search result through the second content 930 of the mobile terminal 400 without typing the name of the item included in the first content 910, which is currently executed in the display device 401, in the search window of the second content 930.

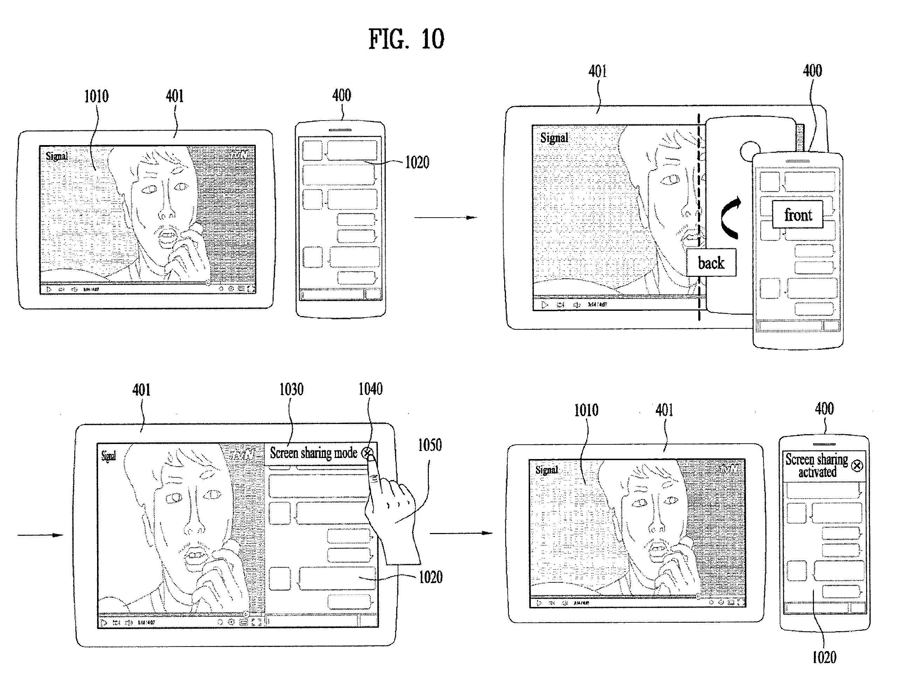

FIG. 10 is a diagram for explaining an example of running a content currently executed in a mobile terminal on a display device according to an embodiment of the present invention. Overlapping description with the embodiments of FIGs. 4 to 9 will be omitted in the following.

Referring to the first drawing of FIG. 10, the display device 401 may output a first content 1010 through the second display unit and the mobile terminal 400 may output a second content 1020 through the first display unit. In this case, the display device 401 may display the first content 1010 on the second display unit as a full screen and the mobile terminal 400 may also display the second content 1020 on the first display unit as a full screen. Here, for example, the first content 1010 may be a video playback application and the second content 1020 may be a chat application.

Referring to the second drawing of FIG. 10, when detecting that the mobile terminal 400 satisfies a predetermined location condition of the second display unit of the display device 401, the mobile terminal 400 may transmit a signal for controlling the display device 401 to display the second content 1020 executed in the mobile terminal 400 on a predetermined partial area of the second display unit of the display device 401.

Here, the predetermined location condition may mean that the first display unit of the mobile terminal 400 touches a predetermined area of the second display unit of the display device 401. That is, the first display unit of the mobile terminal 400 may cover a partial area of the second display unit of the display device 401. For instance, a user may turn over the mobile terminal 400 that faces upward and then place it at the predetermined area of the second display unit of the display device 401.

In an embodiment of the present invention, by receiving the signal that indicates the execution of the second content 1020 from the mobile terminal 400, the display device 401 may output the second content 1020 through the predetermined partial area of the second display unit.

In more detail, referring to the third drawing of FIG. 3, while displaying the first content 1010 on the second display unit, the display device 401 may output the second content 1020 through the predetermined partial area. In this case, the display device 401 may vertically partition the second display unit into two areas and then output the first content 1010 through the left area and the second content 1020 through the right area.

Moreover, in an embodiment of the present invention, when transmitting the signal for controlling the display device 401 to output the second content 1020, the mobile terminal 400 may terminate or maintain the execution of the second content 1020 through the first display unit.

In an embodiment of the present invention, the display device 401 may display an indicator 1030 indicating that the second content 1020 is shared with the mobile terminal 400 on the second content 1020 outputted through the second display unit. For instance, the indicator 1030 may correspond to a 'Screen sharing mode' icon.

Furthermore, in an embodiment of the present invention, the display device 401 may sense a first input signal 1050 of selecting an 'END' icon 1040. Here, the 'END' icon may be included in the indicator 1030 displayed on the second display unit. For instance, when the user intends to terminate the second content 1020 executed in the display device 401, the user may touch the 'END' icon 1040.

Referring to the fourth drawing of FIG. 10, after sensing the first input signal 1050, the display device 401 may terminate the display of the second content 1020 and then display the first content 1010 on the second display unit as the full screen again. In addition, after sensing the first input signal 1050, the display device 401 may transmit a control signal for indicating that a content link is terminated to the mobile terminal 400. After receiving the signal for indicating that the content link is terminated from the display device 401, the mobile terminal 400 may display the second content 1020 on the first display unit as the full screen again.

### Control of Content Executed in Display Device at Mobile Terminal

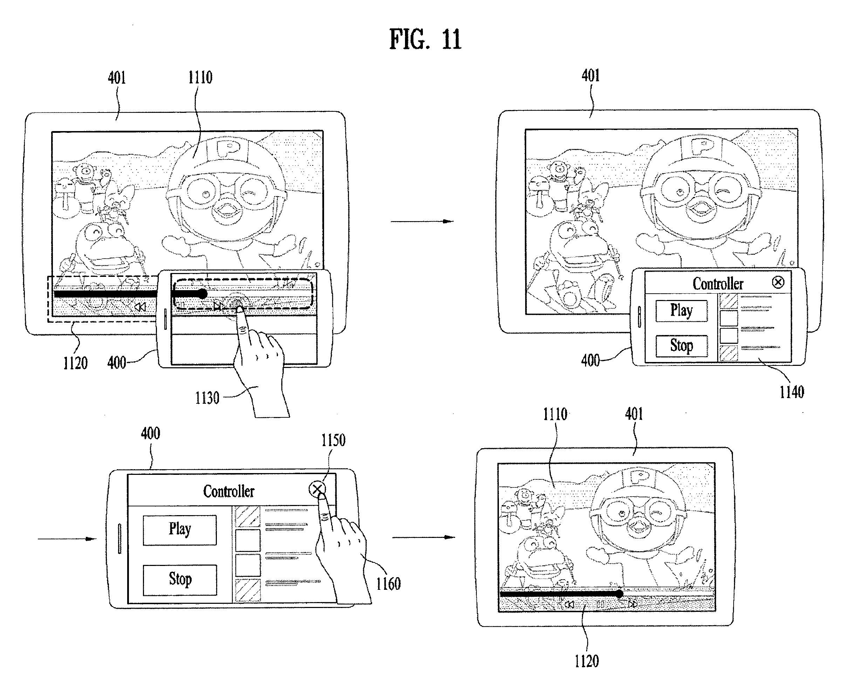

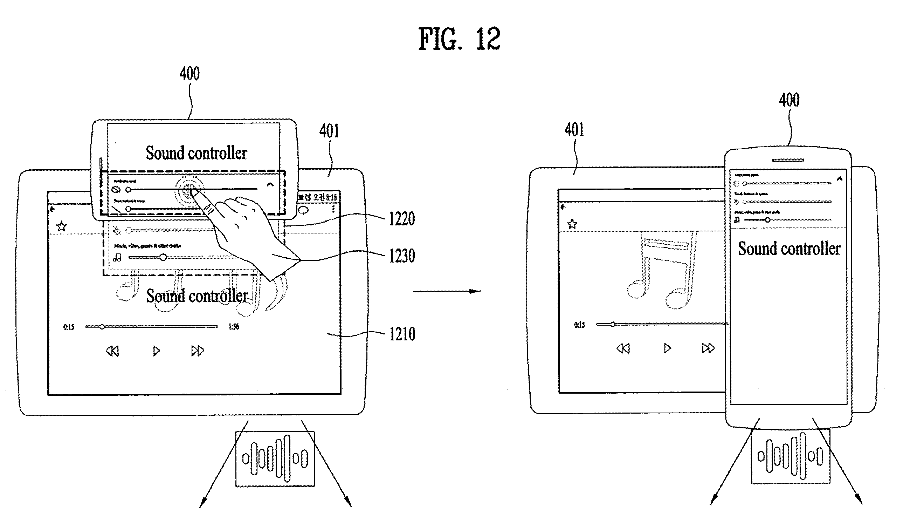

FIGs. 11 and 12 illustrate operations of a mobile terminal and a display device according to embodiments of the present invention. Referring to FIGs. 11 and 12, while the display device outputs a controller for controlling a content executed in the display device, if the mobile terminal satisfies a predetermined location condition, the mobile terminal may also output the controller. Thus, the mobile terminal may control the content executed in the display device. In FIG. 11, the content executed in the display device is assumed to be a video playback application. In addition, in FIG. 12, the content executed in the display device is assumed to be a music playback application.

FIG. 11 is a diagram for explaining an example of controlling a content currently executed in a display device through a mobile terminal according to an embodiment of the present invention. Overlapping description with the embodiments of FIGs. 4 to 10 will be omitted in the following.

Referring to the first drawing of FIG. 11, the display device 401 may display a first content 1110 on the second display unit. Here, the first content 1110 may be a content including a controller area 1120. In addition, the controller area 1120 may be an area in which a signal for controlling a content is received. For example, if the first content 1110 is the video playback application, the first content 1110 may include the controller area 1120 in which icons capable of controlling the video playback application such as pause, playback, rewind, fast forward, and the like.

In an embodiment of the present invention, when detecting that the mobile terminal 400 satisfies a predetermined location condition of the second display unit of the display device 401, the mobile terminal 400 may recognize the first content 1110 executed in the display device 401. Here, the predetermined location condition may mean that the mobile terminal 400 is overlaid with at least a part of the controller area 1120 of the first content 1110 displayed on the second display unit of the display device 401. For instance, if the mobile terminal 400 hovers over the controller area 1120 of the first content 1110 displayed on the second display unit, the mobile terminal 400 may detect that the predetermined location condition is satisfied.

In an embodiment of the present invention, when detecting that the mobile terminal 400 satisfies the predetermined location condition, the mobile terminal 400 may output at least a part of the controller area 1120 of the first content 1110 displayed on the second display unit through the first display unit. For instance, as shown in the first drawing of FIG. 11, the mobile terminal 400 and the display device 401 may partition the controller area 1120 and then output the partitioned controller area 1120 through the first display unit and the second display unit, respectively. Thus, a user may have a feeling that at least a part of the controller area 1120 displayed on the display device 401 is brought to the mobile terminal 400.

In an embodiment of the present invention, while displaying the controller area 1120 on the first display unit, the mobile terminal 400 may sense a first input signal 1130. Here, the first input signal 1130 may be an input signal of touching the controller area 1120 in a predetermined manner. For instance, the user may perform deep-press-touch on the controller area 120 on the first display unit.

Referring to the second drawing of FIG. 11, after sensing the first input signal 1130, the mobile terminal 400 may enlarge the controller area 1120 and then display the enlarged controller area 1120. Additionally, after sensing the first input signal 1130, the mobile terminal 400 may transmit a signal for controlling the display device 401 to terminate the output of the controller area 1120 through the second display unit.

In an embodiment of the present invention, after the mobile terminal senses the first input signal 1130, the display device 401 may display the first content 1110 without the controller area 1120. Thus, the user may have a feeling that the controller area 1120 displayed on the display device 401 is brought to the mobile terminal 400.

Moreover, in an embodiment of the present invention, when sensing an input signal for controlling the controller area 1120, the mobile terminal 400 may transmit a signal for controlling the first content 1110 to the display device 401 based on the input signal. For instance, when the user touches a 'PAUSE' icon displayed on the first display unit of the mobile terminal 400, the mobile terminal 400 may transmit a signal for controlling the display device 401 to pause playback of the first content 1110 to the display device 401.

Furthermore, after sensing the first input signal 1130, the mobile terminal 400 may display not only the controller area 1120 capable of controlling the first content 1110 but also a playback list 1140 on the first display unit. In this case, the controller area 1120 may include a 'PLAY' icon and a 'STOP' icon. In addition, the playback list 1140 may include at least one video content.

Although not shown in the drawings, when sensing an input signal for selecting a video content included in the playback list 1140, the mobile terminal 400 may transmit a signal for controlling the display device 401 to output the selected video content through the second display unit to the display device 401. Thus, the display device 401 may playback the selected video content through the second display unit.

Details of the playback list 1140 will be described with reference to the third drawing of FIG. 11. Referring to the third drawing of FIG. 11, the mobile terminal 400 may display the controller area 1120 and the playback list 1140 on the first display unit. In this case, the playback list may include at least one video content. The at least one video content may include both video contents stored in the first memory of the mobile terminal 400 and video contents stored in the second memory of the display device 401.

In addition, in an embodiment of the present invention, the mobile terminal 400 may distinguish between the video contents stored in the first memory and the video contents stored in the second memory of the display device 401 and display the distinguished video contents. For instance, the mobile terminal 400 may display the video contents stored in the first memory with a red color of a frame indicator and the video contents stored in the second memory with a yellow color of a frame indicator. Thus, the user may playback a video content stored in the mobile terminal 400 or the display terminal 401 by checking the playback list 1140 displayed on the mobile terminal 400.

In an embodiment of the present invention, the mobile terminal 400 may further output an 'END' icon 1150 for terminating the display of the controller area 1120 and the playback list 1140. In addition, the mobile terminal 400 may sense a second input signal 1160 of selecting the 'END' icon 1150.

Referring to the fourth drawing of FIG. 11, after sensing the second input signal 1160, the mobile terminal 400 may terminate the output of the controller area 1120 and the playback list 1140 through the first display unit. Moreover, after sensing the second input signal 1160, the mobile terminal 400 may transmit a signal for controlling the display device 401 to output the controller area 1120 through the second display unit having the first content 1110 displayed thereon. Thereafter, the display device 401 may output the first content 1110 together with the controller area 1120 through the second display unit.

FIG. 12 is a diagram for explaining another example of controlling a content currently executed in a display device through a mobile terminal according to an embodiment of the present invention. Overlapping description with the embodiments of FIG. 11 will be omitted in the following.

Referring to the first drawing of FIG. 12, the display device 401 may output a first content 1210 through the second display unit. Here, the first content 1210 may be a content including a controller area 1220. In addition, if the first content 1210 is the music playback application, the display device 401 may output the first content 1210 through the second audio output unit. Moreover, if the first content 1210 is the music playback application, the first content 1210 may include a controller area 1220 for controlling volume of music. Furthermore, if the first content 1210 is the music playback application, the first content 1210 may include the controller area 1220 for selecting a device for music playback. For instance, the controller area 1220 may include an indicator for controlling the volume of music or an indicator for selecting the device for sound output.

In an embodiment of the present invention, when detecting that the mobile terminal 400 satisfies a predetermined location condition of the second display unit of the display device 401, the mobile terminal 400 may output at least a part of the controller area 1220 of the first content 1210 displayed on the second display unit through the first display unit.

In an embodiment of the present invention, while displaying the controller area 1220 on the first display unit, the mobile terminal 400 may sense a first input signal 1230. Here, the first input signal 1230 may be an input signal of touching the controller area 1220 in a predetermined manner.

Referring to the second drawing of FIG. 12, after sensing the first input signal 1230, the mobile terminal 400 may transmit a signal for controlling the display device 401 to terminate the output of the controller area 1220 through the second display unit. Thereafter, the display device 401 may display the first content 1210 except the controller area 1220 on the second display unit.

In an embodiment of the present invention, when sensing an input signal for controlling the controller area 1220, the mobile terminal 400 may transmit a signal for controlling the first content 1210 to the display device 401 based on the input signal. For instance, a user may turn up the volume of the first content 1210 by touching the controller area 1220 for controlling the volume of the music displayed on the first display unit of the mobile terminal 400.

Moreover, in an embodiment of the present invention, when sensing a different input signal for controlling the controller area 1220, the mobile terminal 400 may execute the first content 1210 through the first audio output unit of the mobile terminal 400 based on the different input signal. For instance, the user may enable the mobile terminal 400 to execute the first content 1210 through the controller area 1220 displayed on the mobile terminal 400.

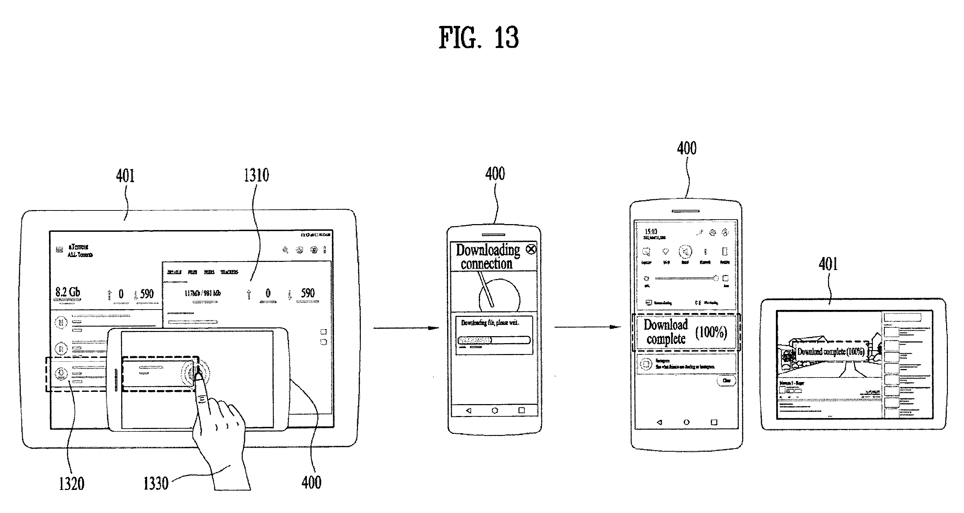

FIG. 13 is a diagram for explaining an example of running a content currently executed in a display device through a mobile terminal according to an embodiment of the present invention. Overlapping description with the embodiments of FIGs. 11 and 12 will be omitted in the following.

Referring to the first drawing of FIG. 13, the display device 401 may execute a first content 1310 including a downloading area 1320 for downloading data. For instance, the first content 1310 may be a movie download application.

In an embodiment of the present invention, when detecting that the mobile terminal 400 satisfies a predetermined location condition of the second display unit of the display device 401, the mobile terminal 400 may recognize the first content 1310 executed in the display device 401. Here, the predetermined location condition may mean that the mobile terminal 400 is overlaid with at least a part of the downloading area 1320 of the first content 1310 displayed on the second display unit of the display device 401.

In an embodiment of the present invention, when sensing that the mobile terminal 400 satisfies the predetermined location condition, the mobile terminal 400 may output at least a part of the downloading area 1320 of the first content 1310 displayed on the second display unit.

Moreover, in an embodiment of the present invention, while displaying the downloading area 1320 on the first display unit, the mobile terminal 400 may sense a first input signal 1330. Here, the first input signal 1330 may be an input signal of touching the downloading area 1320 in a predetermined manner.

Referring to the second drawing of FIG. 13, after sensing the first input signal 1330, the mobile terminal 400 may download data that is to be downloaded by the first content 1310 executed in the display device 401. In this case, unlike the embodiments of FIGs. 11 and 12, while the mobile terminal 400 downloads the data to be downloaded by the first content 1310, the display device 401 may also still download the data through the first content 1310.

Referring to the third drawing of FIG. 13, the mobile terminal 400 and the display device 401 may store the data downloaded by the first content 1310 in the first memory and the second memory, respectively. In addition, after completing the data download, each of the mobile terminal 400 and the display device 401 may use the downloaded data. For instance, if the downloaded data is a movie content, the mobile terminal 400 and the display device 401 may play back the downloaded movie content, respectively.

Therefore, a user of the mobile terminal 400 and the display device 401 may use the data downloaded by one of the two devices at both of the two devices.

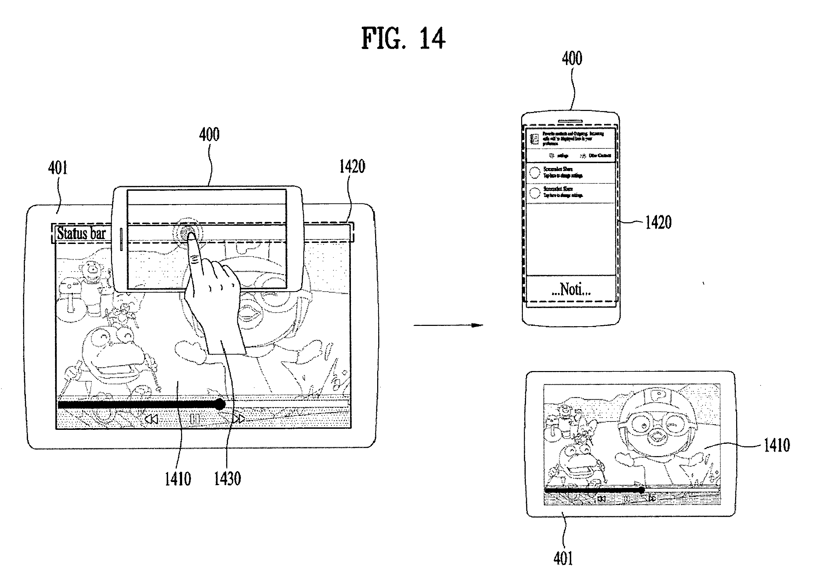

FIG. 14 is a diagram for explaining an example of outputting a content displayed on a display device through a mobile terminal according to an embodiment of the present invention. Overlapping description with the embodiments of FIGs. 11 to 13 will be omitted in the following.

Referring to the first drawing of FIG. 14, the display device 401 may output a first content 1410 through the second display unit. For instance, the first content 1410 may be a video playback application.

In an embodiment of the present invention, while running the first content 1410, the display device 401 may receive a notification 1420 from an external device. For example, while playing back a video, the display device 401 may receive an SMS message. In this case, the display device 401 may display the received notification 1420 on a bar at the top of the second display unit. That is, while outputting the first content 1410 through the second display unit, the display device 401 may display the notification 1420 on the bar at the top of the second display unit.

In an embodiment of the present invention, when detecting that the mobile terminal 400 satisfies a predetermined location condition of the second display unit of the display device 401, the mobile terminal 400 may recognize the notification 1420 displayed on the display device 401. Here, the predetermined location condition may mean that the mobile terminal 400 is overlaid with at least a part of the top bar displayed on the display device 401.

In an embodiment of the present invention, while detecting that the mobile terminal 400 satisfies the predetermined location condition, the mobile terminal may sense a first input signal 1430. Here, the first input signal 1430 may be an input signal of touching the first display unit of the mobile terminal 400 in a predetermined manner. In this case, different from the embodiments of FIGs. 11 to 13, the mobile terminal 400 may sense the first input signal 1430 while the first display unit is deactivated.

Referring to the second drawing of FIG. 14, after sensing the first input signal 1430, the mobile terminal 400 may output the notification 1420 displayed on the bar at the top of the second display unit through the first display unit. For example, after sensing the first input signal 1430, the mobile terminal may display the received SMS message on the first display unit instead of the display device 401. In addition, after sensing the first input signal 1430, the mobile terminal 400 may enlarge the notification 1420 and then display the enlarged notification 1420 on the first display unit.

According to an embodiment of the present invention, after sensing the first input signal 1430, the mobile terminal 400 may transmit a signal for controlling the display device 401 to terminate the display of the notification 1420 on the second display unit to the display device 401. Thereafter, the display device 401 may terminate the display of the notification 1420 on the second display unit and then display the first content 1410 only.

In other words, while a user watches the video through the display device 401, if the display device 401 receives the notification 1420, the user may check the notification 1420 through the mobile terminal 400 to focus on watching the video

### Use of Fingerprint Recognition Function of Mobile Terminal at Display Device

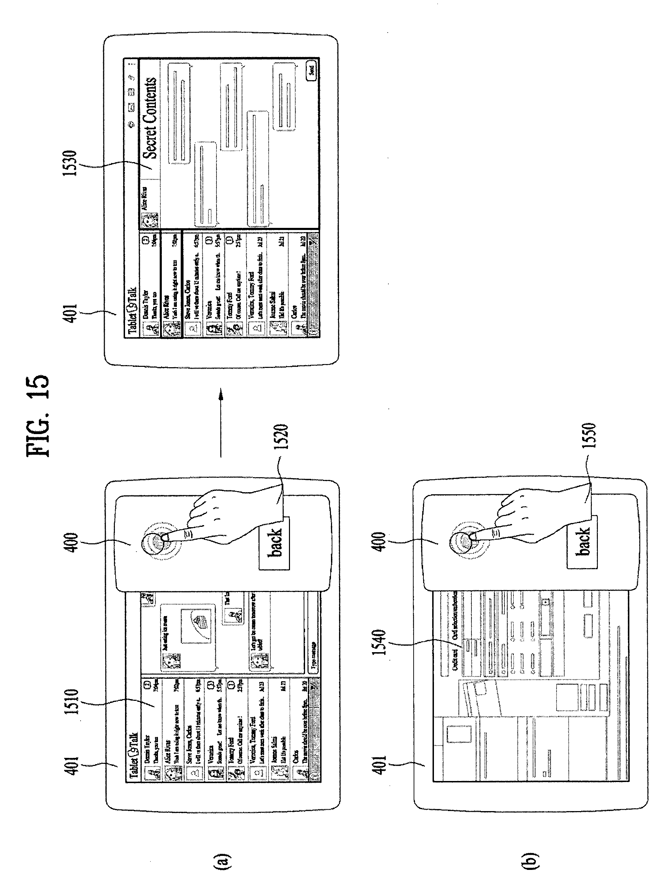

FIG. 15 illustrates an embodiment in which a user uses a fingerprint recognition function of a mobile terminal when managing a secret content or using a payment application in a display device. Since in many cases the fingerprint recognition function is not provided to the display device, the user may use that of the mobile terminal instead.

FIG. 15 is a diagram for explaining an example of performing authentication on a display device using a fingerprint recognition sensor of a mobile terminal according to an embodiment of the present invention. Overlapping description with the embodiments of FIGs. 4 to 13 will be omitted in the following.

Referring to the first drawing of FIG. 15 (a), the display device 401 may output a first content 1510. Here, the first content 1510 may be a chat application. In addition, while the mobile terminal 400 is linked with the display device 401, the mobile terminal 400 may sense a first fingerprint input 1520 from a user using a fingerprint recognition sensor included in the mobile terminal 400. By sensing the first fingerprint input 1520, the mobile terminal 400 may perform authentication of the first fingerprint input 1520 and then transmit authentication information to the display device 401.

Referring to the second drawing of FIG. 15 (a), if receiving the authentication information from the mobile terminal 400, the display device 401 may further display a secret content together with the first content 1510. For instance, the display device 401 may further display a secret chat window 1530 of the chat application.

Referring to FIG. 15 (b), the display device 401 may output a payment application as a second content 1540. In this case, the display device 401 may require fingerprint authentication to perform a payment using the second content 1540.

In an embodiment of the present invention, the mobile terminal 400 may sense a second fingerprint input 1550 from the user using the fingerprint recognition sensor included in the mobile terminal 400. By sensing the second fingerprint input 1550, the mobile terminal 400 may perform authentication of the second fingerprint input 1550 and then transmit authentication information to the display device 401. Thereafter, the display device 401 may perform the payment based on the received authentication information.

In other words, even in the case that the fingerprint recognition sensor is not provided to the display device 401, the user may activate the secret content or perform the payment using the fingerprint recognition sensor included in the mobile terminal 400.

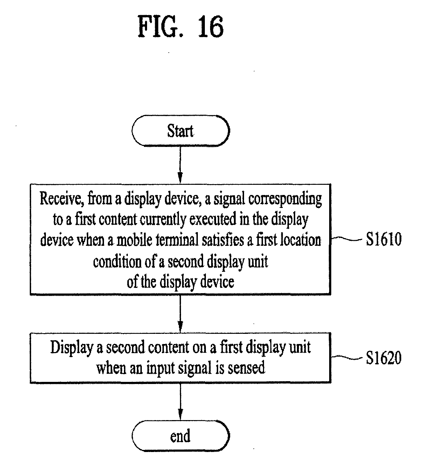

FIG. 16 is a flowchart for explaining an example of outputting a content related to a content currently executed in a display device to a mobile terminal according to an embodiment of the present invention. Each step described in the following with reference to FIG. 16 can be controlled by the controller of FIG. 1A.

In step S1610, if a mobile terminal satisfies a first location condition of a second display unit of a display device, the mobile terminal may receive a signal corresponding to a first content from the display device. Here, the first content may correspond to a content currently executed in the second display unit of the display device.

In this case, the first location condition may mean a condition in which the mobile terminal is overlaid with a predetermined area of the second display unit of the display device and the mobile terminal is located within a predetermined vertical distance from the second display unit of the display device. Moreover, by receiving the signal corresponding to the first content from the display device, the mobile terminal may recognize the first content executed by the display device.

In step S1620, while recognizing the first content, the mobile terminal may sense a first input signal. Here, the first input signal may be a predetermined touch signal.

Moreover, the mobile terminal may sense the first input signal when a first display unit displays a home screen as well as when the first display unit is deactivated. Here, the deactivated state may mean that the first display unit is turned off.

In an embodiment of the present invention, after sensing the first input signal, the mobile terminal may output a second content through the first display unit. Here, the second content may correspond to a list of contents linkable to the first content.

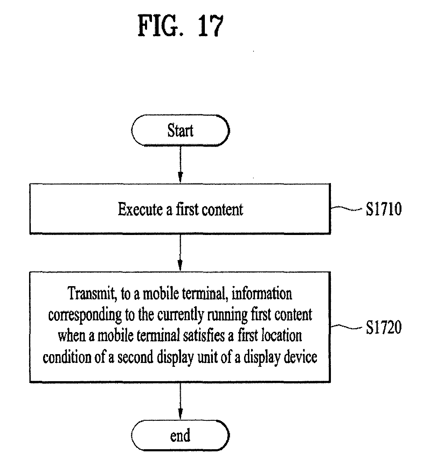

FIG. 17 is a flowchart for explaining an example of transmitting information corresponding to a content from a display device to a mobile terminal according to an embodiment of the present invention. Each step described in the following with reference to FIG. 17 can be controlled by the controller of FIG. 1A. Moreover, overlapping description with the embodiment of FIG. 16 will be omitted in the following.

In step S1710, a display device may execute a first content on a second display unit. Moreover, in an embodiment of the present invention, although a mobile terminal does not satisfy a first location condition, the mobile terminal and the display device can maintain a paired state.

In step S1720, when the mobile terminal satisfies the first location condition of the second display unit of the display device, the display device may transmit information corresponding to the first content, which is currently executed in the display device, to the mobile terminal. That is, the display device may detect whether the mobile terminal covers a predetermined area of the second display unit of the display device. Moreover, in another embodiment of the present invention, if the mobile terminal satisfies the first location condition, the mobile terminal and the display device may be paired with each other. Furthermore, after the mobile terminal and the display device are paired with each other, the pairing can be maintained even if the mobile terminal does not satisfy the predetermined location condition.

In addition, the above-described methods can be implemented in a program-recorded medium as computer-readable codes. The computer-readable media may include all kinds of recording devices in which data readable by a computer system are stored. The computer-readable media may include HDD (hard disk drive), SSD (solid state disk), SDD (silicon disk drive), ROM, RAM, CD-ROM, magnetic tapes, floppy disks, optical data storage devices, and the like, for example and also include carrier-wave type implementations (e.g., transmission via Internet). Further, the computer may include the control unit 180 of the terminal. Therefore, the above embodiments are to be construed in all aspects as illustrative and not restrictive. The scope of the present invention should be determined by reasonable interpretation of the appended claims. In addition, the present invention covers the modifications and variations of this invention that come within the scope of the appended claims and their equivalents.

## Claims

1. A mobile terminal comprising:
a sensor;
a wireless communication unit configured to communicate with an external display device;
a display; and
a controller configured to receive, via the wireless communication unit, information corresponding to a first content displayed on the external display device when position information of the mobile terminal received via the sensor satisfies a first position condition with respect to a display of the external display device.

2. The mobile terminal of claim 1, wherein the controller is further configured to:
cause the display of the mobile terminal to display a list of contents linkable to the first content when a first input is received;
execute second content in response to an input selecting the second content from the content list, wherein the second content corresponds to an application related to the first content.

3. The mobile terminal of claim 2, further comprising a camera, wherein the second content is a camera application and the controller is further configured to:
capture one or more images via the camera; and
cause the wireless communication unit to transmit, to the external display device, a control signal to display the captured one or more images on the first content.

4. The mobile terminal any one of claims 2 and 3, wherein:
the controller is further configured to terminate execution of the second content in response to a second input while the mobile terminal is positioned in a first predetermined position with respect to the display of the external display device; and
the second input is a same type of input as the first input.

5. The mobile terminal of any one of claims 1 to 4, further comprising a memory, wherein the controller is further configured to:
execute second content which is a same type of content as the first content;
cause the display of the mobile terminal to display a first list related to the first content in response to a list input received while the position information of the mobile terminal satisfies a second position condition with respect to the display of the external display device, wherein the first list is stored in the memory and is displayed via the executed second content; and
transmit to the external display device, via the wireless communication unit, a control signal for displaying a second list related to the first content stored in a memory of the external display device.

6. The mobile terminal of claim 5, wherein the first content corresponds to a music playback application and the controller is further configured to cause the display of the mobile terminal to display a third list including the entries contained in the first list and the entries contained in the second list in response to an input selecting the first list.

7. The mobile terminal of any one of claims 1 to 6, wherein the controller is further configured to execute a second content corresponding to a web browser application for retrieving information related to an item displayed in the first content.

8. The mobile terminal of claim 7, wherein the controller is further configured to retrieve the related information and cause the display of the mobile terminal to display the related information via the web browser application.

9. The mobile terminal of any one of claims 1 to 8, wherein the controller is further configured to cause the wireless communication unit to transmit, to the external display device, a control signal for executing a second content in a predetermined partial area of the display of the external display device when the position information of the mobile terminal satisfies a second position condition while the second content is being executed at the mobile terminal.

10. The mobile terminal of any one of claims 1 to 9, wherein:
the first content corresponds to an application comprising a displayed control region;
the controller is further configured to recognize the first content when the position information of the mobile terminal satisfies a second position condition with respect to the display of the external display device;
the second position condition comprises a position in which the mobile terminal is overlaid over at least a part of the displayed control region of the first content displayed on the external display device; and
the controller is further configured to cause the display of the mobile terminal to display another control region of the first content.

11. The mobile terminal of claim 10, the controller is further configured to cause the wireless communication unit to transmit, to the external display device, a control signal for controlling the first content based on an input to the another control region.

12. The mobile terminal of any one of claims 1 to 11, wherein:
the first content corresponds to an application for downloading data comprising a displayed download status region;
the controller is further configured to recognize the first content when the position information of the mobile terminal satisfies a second position condition with respect to the display of the external display device;
the second position condition comprises a position in which the mobile terminal is overlaid over at least a part of the displayed download status region displayed on the external display device; and
the controller is further configured to download data, to the mobile terminal, in response to an input selecting a specific download task from the download status region.

13. A display device comprising:
a sensor;
a wireless communication unit configured to communicate with an external mobile terminal;
a display; and
a controller configured to transmit, to the external mobile terminal, information corresponding to first content being executed at the display device when position information of the external mobile terminal received via the sensor satisfies a first position condition.

14. A method of controlling a mobile terminal, the method comprising:
receiving, from an external display device, information corresponding to a first content displayed on the external display device when position information of the mobile terminal received via a sensor of the mobile terminal satisfies a first position condition with respect to a display of the external display device;
displaying a list of contents linkable to the first content in response to a first input; and
executing second content in response to an input selecting the second content from the content list, wherein the second content corresponds to an application related to the first content.

15. A method of controlling a display device, the method comprising:
executing a first content;
detecting a position of an external mobile terminal with respect to a display of the display device; and
transmitting, to an external mobile terminal, information corresponding to the first content when the position of the external mobile terminal satisfies a first position condition while the first content is executed.
